(19)

**Europäisches Patentamt**
**European Patent Office**
**Office européen des brevets**

(11) **EP 4 166 693 A1**

(12) **EUROPEAN PATENT APPLICATION**
published in accordance with Art. 153(4) EPC

(43) Date of publication:
**19.04.2023 Bulletin 2023/16**

(21) Application number: **21826718.5**

(22) Date of filing: **15.06.2021**

(51) International Patent Classification (IPC):
***C25B 13/02*** (2006.01)    ***C25B 1/04*** (2021.01)
***C25B 9/00*** (2021.01)    ***C25B 9/23*** (2021.01)

(52) Cooperative Patent Classification (CPC):
**C25B 1/04; C25B 9/00; C25B 9/23; C25B 13/02;**
Y02E 60/36

(86) International application number:
**PCT/JP2021/022740**

(87) International publication number:
**WO 2021/256472 (23.12.2021 Gazette 2021/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.06.2020 JP 2020103302**

(71) Applicant: **Asahi Kasei Kabushiki Kaisha
Tokyo 1000006 (JP)**

(72) Inventors:
• **WATANABE, Akira
Tokyo 100-0006 (JP)**

• **FUJIMOTO, Norikazu
Tokyo 100-0006 (JP)**
• **UCHINO, Yousuke
Tokyo 100-0006 (JP)**
• **YAMAURA, Hiroshige
Tokyo 100-0006 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **BIPOLAR ZERO GAP ELECTROLYTIC CELL FOR WATER ELECTROLYSIS**

(57)    The present disclosure aims at providing an electrolysis apparatus that can efficiently produce hydrogen and can accommodate fluctuating power supplies. A bipolar zero-gap electrolyzer for water electrolysis includes multiple bipolar elements, each of which includes an anode chamber, a cathode chamber, a conductive partition wall provided between the anode and cathode chambers, and outer frames framing the conductive partition wall. The conductive partition wall has protrusions on at least one surface. A conductive elastic body is disposed between a surface of the conductive partition wall opposite the one surface and one of the electrodes. One and the other of the electrodes form conduction with the conductive partition wall at least through the protrusions and at least through the conductive elastic body, respectively. The membrane is sandwiched between the cathode and the anode of the adjacent bipolar elements by elastic stress of the conductive elastic body.

EP 4 166 693 A1

*FIG. 3A*

*FIG. 3B*

*FIG. 3C*

**Description**

TECHNICAL FIELD

The present disclosure relates to a bipolar zero-gap electrolyzer for water electrolysis.

BACKGROUND

In recent years, technology utilizing renewable energy such as wind power or sun light, for example, wind power generation, photovoltaic power generation, or the like has attracted attention in order to solve issues including global warming due to greenhouse gases such as carbon dioxide, decrease in fossil fuel reserves, and the like.

The renewable energy has the property of greatly fluctuating because its output depends on climatic conditions. Thus, it is not always possible to transport electric power (hereinafter also referred to as "fluctuating power supply") obtained by electric power generation utilizing the renewable energy to a general electric power system, and there is concern about social influences such as imbalance between electric power supply and demand, destabilization of the electric power system, and the like. It is also well known that an imbalance between the electric power demand and the electric power obtained from the renewable energy not only occurs during the course of a day, but also during different seasons.

Therefore, research has been conducted to convert the electric power generated from the renewable energy into a form suitable for storage and transportation to utilize the electric power. Specifically, it is studied to generate hydrogen, which can be stored and transported, by water electrolysis (electrolysis) using the electric power generated from the renewable energy and to use the generated hydrogen as an energy source or raw material.

Hydrogen is widely used in industrial fields of petroleum refining, chemical synthesis, metal refining, and the like. In recent years, there has also been an increase in applicability of hydrogen in hydrogen stations for fuel cell vehicles (FCVs), smart communities, and hydrogen power plants, and the like. Accordingly, there is high expectation for development of technology to obtain, in particular, high-purity hydrogen from the renewable energy.

Methods for water electrolysis include solid polymer electrolyte water electrolysis, high-temperature steam electrolysis, alkaline water electrolysis, and the like. Among these, the alkaline water electrolysis is regarded as one of the most promising methods because of its industrialization over decades, large-scale availability, inexpensiveness as compared to other water electrolysis apparatuses, and the like.

However, in order to adapt the alkaline water electrolysis as a means for storing and transporting energy in the future, it is necessary to perform the water electrolysis with the efficient and stable use of the greatly fluctuating electric power, as described above. The aforementioned imbalance between supply and demand, in particular, wide fluctuations in the electric power supply from the renewable energy result in fluctuations in electric power to be supplied to a water electrolysis apparatus. As a result, since current density per unit area of an electrolytic cell fluctuates, in existing alkaline water electrolysis apparatuses, there are concerns about increase in refining loss and the like, due to deterioration in an electric power consumption rate for hydrogen production and increase in concentration of oxygen in the generated hydrogen and/or concentration of hydrogen in oxygen. Under these circumstances, the capacity of the water electrolysis apparatus has to be increased to be able to receive a wide range of current, which increases capital investment and creates profitability problems. Therefore, it is desirable for the water electrolysis apparatus to be able to efficiently produce hydrogen at a wide range of current densities.

For example, in order to address an issue of improving an electric power consumption rate in hydrogen production by decreased bath voltage in alkaline water electrolysis, it is well known that adoption of an electrolytic cell structure referred to as a zero-gap structure, which is a structure in which gaps between a membrane and electrodes are substantially eliminated, is effective (see Patent Literatures (PTLs) 1 and 2). With the zero-gap structure, by enabling rapid escape of evolved gas through pores in an electrode to a side opposite to the side of the membrane of the electrode, it is possible to reduce the distance between the electrodes, while minimizing gas accumulation near the electrodes as much as possible, and maintain a low bath voltage. Therefore, the zero-gap structure is very effective in suppressing the bath voltage and is adopted in various electrolysis apparatuses.

In recent years, in order to realize efficient and stable alkaline water electrolysis, research has been actively conducted to address the above issues by optimizing electrodes, membranes, and the like, in addition to optimizing the structure of an electrolytic cell (see PTLs 3 and 4).

Furthermore, from a cost perspective, a compact and thin water electrolyzer is desirable. On the other hand, even if the width of an electrode chamber is narrow, it is desirable that pressure loss of a liquid flow should be low and temperature distribution affected by heat generation should be uniform. In power fluctuation operation, internal pressure fluctuations in the electrolyzer cause differential pressure fluctuations between anode and cathode chambers, which makes it impossible to control pressure in a zero-gap area to a constant level, resulting in poor formation of a zero gap, which deteriorates electrolysis efficiency. In addition, the differential pressure fluctuations between the anode and cathode chambers may damage a membrane and cause mixing of oxygen and hydrogen gases. When differential pressure fluctuations occur, contact areas between other components may also be damaged due to friction between contact parts. In particular, when a protective layer such as nickel plating is formed on an electrolytic frame that forms the electrolyzer, the protective layer may be damaged, causing corrosion.

CITATION LIST

Patent Literature

PTL 1: US4530743A
PTL 2: JPS59173281A
PTL 3: WO2013191140A1
PTL 4: JP2015117417A

SUMMARY

(Technical Problem)

Therefore, an object of the present disclosure is to provide an electrolyzer that can efficiently produce hydrogen over a wide range of current densities and can accommodate fluctuating power supplies.

(Solution to Problem)

The gist of the present disclosure is as follows.

[1] A bipolar zero-gap electrolyzer for water electrolysis comprising a plurality of bipolar elements stacked so as to sandwich a gasket and a membrane, each of the bipolar elements comprising an anode chamber with an anode, a cathode chamber with a cathode, a conductive partition wall provided between the anode chamber and the cathode chamber, and an outer frame framing the conductive partition wall, surface pressure being applied between the gasket and the partition wall and between the gasket and the outer frame to achieve sealing of an electrolyte, wherein

the conductive partition wall has protrusions on at least one surface,
a conductive elastic body is disposed between a surface of the conductive partition wall opposite the one surface and one of the electrodes,
one and the other of the electrodes form conduction with the conductive partition wall at least through the protrusions and at least through the conductive elastic body, respectively, and
the membrane is sandwiched between the cathode and the anode of the adjacent bipolar elements by elastic stress of the conductive elastic body.

[2] The bipolar zero-gap electrolyzer for water electrolysis described in [1], wherein the protrusions are on at least the one surface of the conductive partition wall, and concavities corresponding to the protrusions are on the surface opposite the one surface.
[3] The bipolar zero-gap electrolyzer for water electrolysis described in [1] or [2], wherein

the conductive partition wall has the protrusions, concavities, and flat portions on surfaces,
the protrusions are disposed only on the one surface, and the flat portions are each disposed between at least a pair of the protrusions adjacent to each other, and
the concavities are disposed only on the surface opposite the one surface, and the flat portions are each disposed between at least a pair of the concavities adjacent to each other.

[4] The bipolar zero-gap electrolyzer for water electrolysis described in any one of [1] to [3], wherein a conductive elastic body is disposed between the one surface of the conductive partition wall and one of the electrodes provided in one of the electrode chambers on a side of the one surface.
[5] The bipolar zero-gap electrolyzer for water electrolysis described in [1] or [2], wherein the conductive partition wall has the protrusions on both surfaces, and the conductive elastic bodies are disposed adjacent to each of the both surfaces of the conductive partition wall.

[6] The bipolar zero-gap electrolyzer for water electrolysis described in any one of [1] to [5], wherein the conductive elastic body is at least in the cathode chamber.

[7] The bipolar zero-gap electrolyzer for water electrolysis described in any one of [1] to [6], wherein an interval between the protrusions is 10 mm or more and 100 mm or less.

[8] The bipolar zero-gap electrolyzer for water electrolysis described in any one of [1] to [7], wherein

an interval between the protrusions is 10 mm or more and 100 mm or less,
a diameter of each of the protrusions is 1 mm or more and 70 mm or less, and
a height of each of the protrusions is 0.1 mm or more and 20 mm or less.

[9] The bipolar zero-gap electrolyzer for water electrolysis described in any one of [1] to [8], wherein the membrane is a porous membrane.

[10] The bipolar zero-gap electrolyzer for water electrolysis described in any one of [1] to [9], wherein

a current collector is disposed between the conductive elastic body and the conductive partition wall, and
a contact resistance of the current collector is 1 m$\Omega$cm$^2$ or more and 150 m$\Omega$cm$^2$ or less.

[11] The bipolar zero-gap electrolyzer for water electrolysis described in any one of [1] to [10], wherein an elastic modulus of the anode is 0.01 GPa or more and 200 GPa or less.

[12] The bipolar zero-gap electrolyzer for water electrolysis described in any one of [1] to [11], wherein an elastic modulus of the cathode is 0.01 GPa or more and 200 GPa or less.

[13] The bipolar zero-gap electrolyzer for water electrolysis described in any one of [1] to [12], wherein

the conductive elastic body is a conductive cushion mat, and
the conductive cushion mat has a wire diameter of 0.05 mm or more and 1 mm or less, a thickness during compression of 1 mm or more and 20 mm or less, and an elastic stress at 50% compression deformation of 1 kPa or more and 1000 kPa or less.

[14] The bipolar zero-gap electrolyzer for water electrolysis described in any one of [1] to [13], wherein the conductive partition wall has a nickel plating layer.

[15] The bipolar zero-gap electrolyzer for water electrolysis described in any one of [1] to [14], wherein

the anode and/or the cathode are/is made of nickel in material, and at least one porous body selected from a group consisting of metal foams, plain weave mesh-type porous bodies, punched-type porous bodies, or expanded-type porous bodies, and
the porous body is disposed on the conductive elastic body.

[16] The bipolar zero-gap electrolyzer for water electrolysis described in any one of [1] to [15], wherein stack pressure is 0.5 MPa or more and 100 MPa or less.

[17] A hydrogen production method including using the bipolar zero-gap electrolyzer for water electrolysis described in any one of [1] to [16].

[18] The hydrogen production method described in [17], wherein electrolysis operating pressure is 3 to 4000 kPa.

(Advantageous Effect)

According to the present disclosure, it is possible to provide a bipolar electrolyzer and a hydrogen production method that can efficiently produce hydrogen over a wide range of current densities and can accommodate fluctuating power supplies.

BRIEF DESCRIPTION OF THE DRAWINGS

In the accompanying drawings:

FIG. 1 is a side view illustrating, in its entirety, an example of a bipolar zero-gap electrolyzer for water electrolysis according to the present embodiment;
FIG. 2 is an overview of an alkaline water electrolysis apparatus equipped with an example of the bipolar zero-gap electrolyzer for water electrolysis according to the present embodiment;

FIGS. 3A to 3C are drawing illustrating an overview of an example of a zero-gap structure of the bipolar zero-gap electrolyzer for water electrolysis according to the present embodiment, 3A is a cross sectional view of two bipolar elements before stacking, and FIGS. 3B and 3C are cross-sectional views of examples of the bipolar zero-gap electrolyzer for water electrolysis in which the bipolar elements are stacked to form the zero-gap structure;

FIGS. 4A and 4B are a plan view and a cross-sectional view of a conductive partition wall, respectively, illustrating an example of arrangement of protrusions provided on a surface of the conductive partition wall;

FIG. 5 is a plan view illustrating a mesh portion of an expanded-type base material of one example of a porous electrode of the bipolar zero-gap electrolyzer for water electrolysis according to the present embodiment, and a cross-sectional view cut by a plane along line A-A in the plan view;

FIG. 6 is a plan view illustrating a mesh portion of a plain weave mesh-type base material of one example of the porous electrode of the bipolar zero-gap electrolyzer for water electrolysis according to the present embodiment;

FIG. 7 is a plan view illustrating a punched-type base material of one example of the porous electrode of the bipolar zero-gap electrolyzer for water electrolysis according to the present embodiment; and

FIG. 8 is an enlarged schematic diagram illustrating an aperture of one example of the porous electrode of the bipolar zero-gap electrolyzer for water electrolysis according to the present embodiment.

DETAILED DESCRIPTION

An embodiment of the present disclosure (hereinafter, referred to as the "present embodiment") will be described below in detail. Note that, the present disclosure is not limited to the following embodiment and may be implemented with various modifications within the scope of the gist thereof.

A bipolar zero-gap electrolyzer for water electrolysis according to the present embodiment is a bipolar electrolyzer in which a plurality of bipolar elements each having an anode on one side and a cathode on the other side are arranged in the same orientation with a membrane therebetween and connected in series, and connected to a power supply only at both ends. In other words, the bipolar zero-gap electrolyzer for water electrolysis according to the present embodiment is a bipolar electrolyzer with a plurality of combinations (also referred to as "electrolytic cells") of an anode, a cathode, and a membrane disposed between the anode and the cathode.

In the bipolar zero-gap electrolyzer for water electrolysis according to the present embodiment, bipolar elements, each of which includes an anode chamber with an anode, a cathode chamber with a cathode, and a conductive partition wall disposed between the anode chamber and the cathode chamber, are preferably stacked so as to sandwich gaskets and a membrane; the conductive partition wall preferably has protrusions on at least one surface of the conductive partition wall; a conductive elastic body is preferably disposed between a surface opposite the one surface of the conductive partition wall and the electrode; and one and the other of the electrodes preferably form conduction with the conductive partition wall at least through the protrusions and at least through the conductive elastic body, respectively.

In the bipolar zero-gap electrolyzer for water electrolysis according to the present embodiment, a plurality of bipolar elements, each of which includes an anode chamber with an anode, a cathode chamber with a cathode, a conductive partition wall disposed between the anode chamber and the cathode chamber, and outer frames framing the conductive partition wall, are stacked so as to sandwich gaskets and a membrane; surface pressure is applied between the gasket and the membrane and between the gasket and the outer frame to achieve sealing of an electrolyte. In addition, the conductive partition wall preferably has protrusions on at least one surface of the conductive partition wall; a conductive elastic body is preferably disposed between a surface opposite the one surface of the conductive partition wall and the electrode; one and the other of the electrodes preferably form conduction with the conductive partition wall at least through the protrusions and at least through the conductive elastic body, respectively; and the membrane is preferably caught between the cathode and the anode of the adjacent bipolar elements by elastic stress of the conductive elastic body.

The bipolar zero-gap electrolyzer for water electrolysis according to the present embodiment can efficiently produce hydrogen over a wide range of current densities and accommodate fluctuating power supplies. Also, by reducing the thicknesses or widths of the electrode chambers, size is made compact and costs of materials for the structure can be reduced. Low pressure loss in the electrolyzer allows increase in the linear velocity of an electrolyte in a tank, which results in prevention of abnormal temperature rise in the tank and improved defoaming. In addition, even when differential pressure fluctuations occur due to electric power fluctuations, the zero-gap structure can be maintained, and damage to the membrane, electrolytic frame, electrodes, and other components can be prevented.

The conductive partition wall, conductive elastic body, anode, cathode, current collector, and membrane, which are important components characterizing the bipolar zero-gap electrolyzer for water electrolysis according to the present embodiment, will be described below in detail.

In alkaline water electrolysis reaction, alkaline water is electrolyzed in an electrolyzer equipped with an electrode pair (i.e., anode and cathode) connected to a power supply to generate oxygen gas at the anode and hydrogen gas at the cathode.

In this specification, "electrode/electrodes" refers to either one or both of an anode and a cathode. One electrode refers to one of the anode or cathode, and the other electrode refers to an electrode different from the aforementioned one. In addition, "conduction" refers to being electrically connected.

[Conductive Partition Wall]

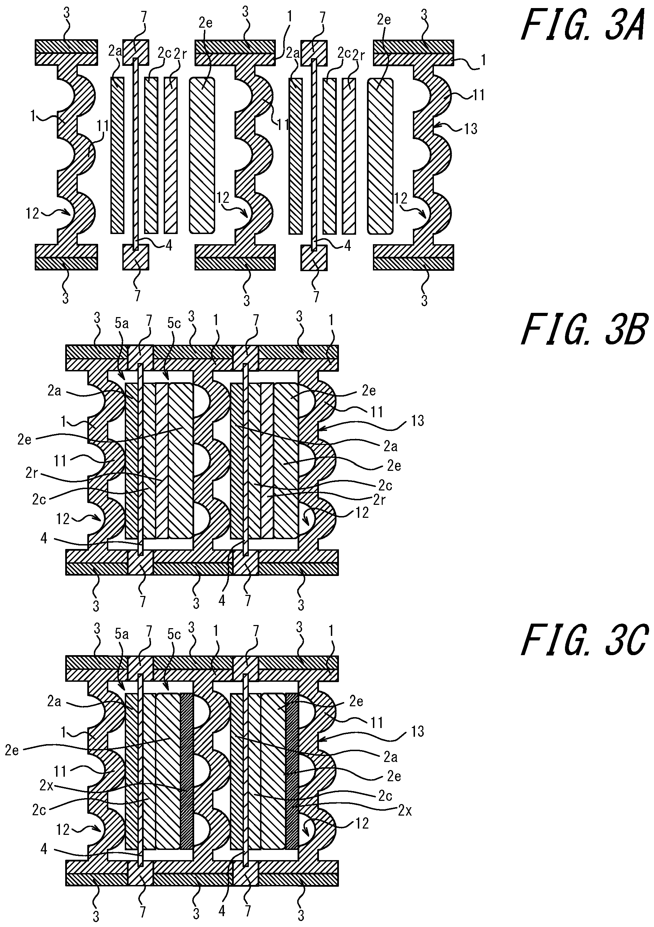

The conductive partition wall is provided between the anode chamber and the cathode chamber (FIGS. 3A to 3C). The conductive partition wall may be shaped with two surfaces, one in contact with the anode chamber and the other in contact with the cathode chamber. The conductive partition wall may have a structure that is impermeable to an electrolyte.

In this specification, one surface of the conductive partition wall refers to a surface on the side of the anode or cathode chamber, and the opposite surface refers to a surface on the side of the electrode chamber that is different from the one surface.

In the bipolar zero-gap electrolyzer for water electrolysis according to the present embodiment, the conductive partition wall has protrusions on at least one surface of the conductive partition wall.

The protrusions support the electrode and form a conductive path between the electrode and the conductive partition wall. Furthermore, the protrusions between the electrode and the partition wall can form a suitable flow path for the electrolyte and a generated gas fluid with low pressure loss. The protrusions also promote agitation of the electrolyte by the generated gas, so temperature distribution, which is affected by heat generated locally in the electrolyzer, is made uniform. This can prevent damage to the components such as the membrane, due to localized temperature rise inside the electrolyzer.

The protrusions according to this specification do not include ribs. The protrusions eliminate the need to weld ribs to the conductive partition wall, leading to cost reduction. Furthermore, when a protective layer such as nickel plating is formed on an electrolytic frame that forms the electrolyzer, there is no place to weld the ribs to the conductive partition wall, thereby suppressing plating defects in nickel plating and achieving both low cost and high durability.

In the conductive partition wall, the protrusions are preferably on only one surface of the conductive partition wall, and concavities corresponding to the protrusions are only on a surface opposite the one surface (FIGS. 3Ato 3C). The concavities are preferably located opposite the protrusions in a thickness direction of the conductive partition wall (FIGS. 3A to 3C). The concavities produce a pressure buffering effect and can smooth pressure fluctuations in the case of sudden changes in gas generation, resulting in reduced differential pressure between the anode chamber and the cathode chamber and preventing damage to the membrane, electrolytic frame, electrodes, and other components. In addition, the concavities prevent the components of the electrolyzer, such as the conductive elastic body, from falling out and reduce contact resistance, thereby forming a suitable electron conductive path.

The protrusions may be on both surfaces of the conductive partition wall. When the protrusions are provided on both the surfaces, there may be corresponding concavities each on the surface opposite the surface with each protrusion at a position opposite each protrusion. In other words, the protrusions and concavities may be provided on the surface.

The protrusions are preferably provided only on the surfaces (surfaces in contact with the anode 2a and the elastic body 2e in FIG. 3B) of the conductive partition wall that are parallel to surfaces of the electrodes. It is preferable that the protrusions are not provided on surfaces that are perpendicular to the surfaces of the electrodes and in contact with the electrode chambers.

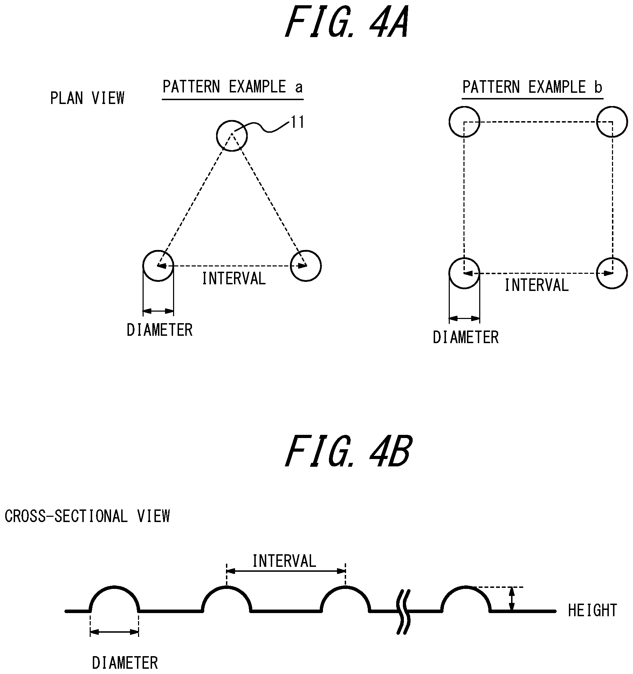

From the viewpoint of workability, the protrusions are preferably provided only on one surface of the conductive partition wall, and the concavities corresponding to the protrusions are preferably provided on the other surface (FIGS. 4A and 4B).

The positions of the concavities are not specified, but the provision of the concavities on the side of the electrode chamber in which gas generation is higher facilitates obtaining the effect of smoothing pressure fluctuations, due to buffering effect, suppressing differential pressure fluctuations, and preventing damage to the membrane, electrolytic frame, electrodes, and other components.

The shape of the protrusions can be any geometric shape, such as corrugated, hemispherical, spherical, circular, oval, trapezoidal, or pyramidal. Hemispherical (FIGS. 4A and 4B) and spherical shapes are preferable in terms of less damage to the electrode.

The protrusions can be arranged at certain intervals. The protrusions can be arranged in any arrangement, such as 60° staggered arrangement, 45° staggered arrangement, or parallel arrangement. Here, the 60° staggered arrangement means that the protrusions are arranged at vertices of an equilateral triangle, and lines connecting the centers of the protrusions are at an angle of 60° (FIG. 4A, pattern example a). The parallel arrangement means that the protrusions are arranged at four corners of a square, and a quadrangle connecting the centers of the protrusions are at an angle of 90° (FIG. 4A, pattern example b). The 45° staggered arrangement means that the protrusions are arranged at four corners of a square and an intersection of diagonal lines, and lines connecting the centers of the protrusions are at angles of 45° and 90°.

The shape of the protrusions, when viewed in plan view of a surface of the conductive partition wall, may be circular, polygonal, or the like.

The intervals between the protrusions are preferably 10 mm or more and 100 mm or less. From the viewpoint of suppressing pressure loss, the intervals are more preferably 20 mm or more, and even more preferably 30 mm or more. From the viewpoint of suppressing deflection of the electrodes, the intervals are more preferably 70 mm or less, and even more preferably 50 mm or less.

The interval between the protrusions may be defined as the distance between the centers of two adjacent protrusions (FIGS. 4A and 4B). The interval of the protrusions also refers to the distance between one protrusion and another protrusion nearest to the protrusion. For example, the intervals of the protrusions are obtained for any 10 protrusions on the conductive partition wall, and the interval between the protrusions may be defined as an average thereof.

The diameters of the protrusions are preferably 1 mm or more and 70 mm or less. From the viewpoint of reduced contact resistance, the diameters are more preferably 3 mm or more, and even more preferably 5 mm or more. From the viewpoint of suppressing pressure loss, the diameters are more preferably 50 mm or less, and even more preferably 30 mm or less.

The diameter of the protrusion refers to the length of a line segment connecting two outer edges of a protrusion shape viewed in plan view, and a maximum length (FIGS. 4A and 4B). For example, the diameter is a diameter in the case of a circle, and is the length of a diagonal line in the case of a quadrangle. For example, the diameters of the protrusions are obtained for any 10 protrusions on the conductive partition wall, and the diameter of the protrusions may be defined as an average thereof.

The heights of the protrusions are preferably 0.1 mm or more and 20 mm or less. From the viewpoint of pressure loss, the heights are more preferably 1 mm or more, and even more preferably 2 mm or more. From the viewpoint of workability, the heights are more preferably 10 mm or less, and even more preferably 6 mm or less. FIGS. 4A and 4B illustrates a cross-sectional view of an example of the protrusions.

The height of the protrusion may be the distance from a surface of the conductive partition wall on a side with the protrusions (for example, a surface of a flat portion) to the highest point of the protrusion in cross-section in the thickness direction of the conductive partition wall. For example, the heights of the protrusions are obtained for any 10 protrusions on the conductive partition wall, and the height of the protrusions may be defined as an average thereof.

The conductive partition wall preferably has a flat portion between at least a pair of adj acent protrusions, of adjacent protrusions on the same surface, and more preferably has a flat portion between every pair of adjacent protrusions (FIGS. 4A and 4B). Also, the conductive partition wall preferably has a flat portion between at least a pair of adjacent concavities, and more preferably has a flat portion between every pair of adjacent concavities (FIGS. 4A and 4B).

It is preferable that the conductive partition wall has the protrusions, the concavities, and the flat portions on the surfaces; the protrusions are arranged on only one surface; and the concavities are arranged only on a surface opposite the one surface. Furthermore, from the viewpoint of preventing damage to the membrane, electrolytic frame, electrodes, and other components by reducing contact resistance and suppressing differential pressure fluctuations, the conductive elastic body is preferably disposed adjacent to the surface of the conductive partition wall on the side with the concavities, one of the electrodes preferably forms conduction with the conductive partition wall at least through the protrusions, the other electrode preferably forms conduction with the flat portions in the surface of the conductive partition wall on the side with the concavities at least through the conductive elastic body, and the membrane is preferably sandwiched between both the electrodes by elastic stress of the conductive elastic body.

The flat portion of the conductive partition wall refers to a flat portion having neither convex nor concave portions. The protrusion refers to a convex portion protruding from the flat portion on a surface of the conductive partition wall with the protrusion toward the electrode on the side of the surface. The concavity refers to a concavity concaving from the flat portion on a surface of the conductive partition wall with the concavity toward a surface opposite the surface. The concavity does not include a through hole or header.

The protrusions are arranged on one surface and the concavities are arranged on a surface opposite the one surface. The protrusions and concavities can each be arbitrarily positioned on the surfaces. From the viewpoint of workability, the concavities are preferably at positions corresponding to the protrusions.

Here, the conductive elastic body is disposed between a surface of the conductive partition wall and the electrode (for example, anode or cathode) provided in the electrode chamber on the side of the surface (FIGS. 3A to 3C). The conductive elastic body and the conductive partition wall preferably form conduction. The conductive elastic body and the surface of the conductive partition wall may be adjacent to each other or may be arranged through another member (for example, a conductive member such as a current collector). For example, the conductive member may be interposed between the surface of the conductive partition wall with the concavities and the conductive elastic body (FIG. 3C).

The bipolar element includes a structure in which the protrusions are provided on only one surface of the conductive partition wall and the electrode is arranged on the other surface via the conductive elastic body (FIGS. 3A to 3C), a structure in which the protrusions are provided on both surfaces of the conductive partition wall and the electrode is arranged on only one surface via the conductive elastic body, and a structure in which the protrusions are provided on both surfaces of the conductive partition wall and the electrodes are arranged on both the surfaces via the conductive elastic bodies.

By forming conduction with the flat portions in a surface of the conductive partition wall on a side with the concavities, a contact area is wider and contact resistance is reduced as compared to forming conduction with protrusions, and hence a suitable electron conductive path can be formed. Furthermore, the buffering effect of the concavities can smooth pressure fluctuations. As a result, differential pressure fluctuations between the anode and cathode chambers are suppressed and damage to the membrane, electrolytic frame, electrodes, and other components can be prevented.

[Conductive Elastic Body]

In the bipolar zero-gap electrolyzer for water electrolysis according to the present embodiment, the conductive elastic body is arranged between at least one surface of the conductive partition wall and the electrode provided in the electrode chamber on a side of the surface (FIGS. 3A to 3C). In particular, the conductive elastic body is preferably disposed adjacent to at least one surface of the conductive partition wall (FIGS. 3A and 3B). The conductive elastic body is preferably disposed at least on a surface opposite a surface with the protrusions. The conductive elastic body may be at least in the cathode chamber or only in the cathode chamber.

The conductive elastic body supports the electrode and forms conduction between the electrode and the conductive partition wall. In addition, the conductive elastic body also serves as a flow path through which the electrolyte and produced gas flow. To form the electrolyzer, the membrane is disposed between adjacent alkaline water electrolysis elements. When the membrane is caught between the cathode of one alkaline water electrolysis element and the anode of the other alkaline water electrolysis element, the provision of the conductive elastic body, which movably supports the anode or the cathode with respect to the conductive partition wall, allows uniform adhesion of the cathode, membrane, and anode, thereby achieving a zero-gap structure. As a result, not only can generated gas be extracted without resistance from a back of the cathode or anode (i.e., a surface opposite a surface in contact with the membrane), but also the retention of bubbles and vibration when the generated gas is extracted can be prevented, enabling stable electrolysis at very low electrolysis voltage for a long period of time.

The conductive elastic bodies may be disposed on both sides of the conductive partition wall. For example, the conductive elastic body may be provided between one surface of the conductive partition wall and one electrode (for example, cathode) and between the other surface of the conductive partition wall and the other electrode (for example, anode). The conductive elastic bodies may be disposed adjacent to both the surfaces of the conductive partition wall. When the elastic bodies are disposed on both sides of the conductive partition wall, the same conductive elastic bodies may be used, or different elastic bodies may be used for each side.

When the conductive elastic bodies are arranged on both sides of the conductive partition wall, the protrusions, the conductive elastic body, and one electrode may be provided adjacent to each other in this order, and the flat portions, the conductive elastic body, and the other electrode may be provided adjacent to each other in this order. Other conductive members may be provided between the conductive partition wall, the conductive elastic body, and the electrodes, as long as one electrode and the other electrode can form conduction.

The most important role of the conductive elastic body is to apply, to the electrode in contact with the membrane, appropriate pressure that is uniform and does not damage the membrane, thus making the membrane and electrode closely adhere to each other. As the conductive elastic body, a spring, wire weave, cushion mat, or other material can be used. For example, a cushion mat (preferably conductive cushion mat) made of woven nickel wire and corrugated can be used.

In the cushion mat, from the viewpoint of workability, a wire diameter is preferably 0.05 mm or more, more preferably 0.1 mm or more, and even more preferably 0.15 mm or more. From the viewpoint of membrane damage, the wire diameter is preferably 1 mm or less, more preferably 0.5 mm or less, and even more preferably 0.3 mm or less. The cushion mat may be folded back or stacked in use.

From the viewpoint of pressure loss, the thickness of the mat when compressed is preferably 1 mm or more, more preferably 2 mm or more, and even more preferably 3 mm or more. From the viewpoint of downsizing the electrolyzer, the thickness of the mat when compressed is preferably 20 mm or less, more preferably 15 mm or less, and even more preferably 8 mm or less. The thickness of the mat when compressed refers to an average of the thickness of the mat when the mat is actually assembled into the electrolyzer and compressed.

From the viewpoint of differential pressure resistance during internal pressure fluctuations, an elastic stress at 50% compression deformation is preferably 1 kPa or more, more preferably 5 kPa or more, and even more preferably 10 kPa or more. From the viewpoint of membrane damage, it is preferably 1000 kPa or less, more preferably 500 kPa or less, even more preferably 100 kPa or less.

The elastic stress at 50% compression deformation can be measured by a method described in examples below.

[Electrode (Anode, Cathode)]

In the bipolar zero-gap electrolyzer for water electrolysis according to the present embodiment, at least one of the anode and cathode is preferably a porous electrode from the viewpoint of defoaming of generated gas.

From the viewpoint of defoaming of generated gas from a back side of a surface in contact with the membrane, in the porous electrode, the surface in contact with the membrane and the opposite surface preferably penetrate (for example, there should be a through hole).

The porous electrode is not particularly limited, but from the viewpoint of controlling an average pore diameter, the porous electrode may be an electrode with a mesh-like structure such as plain weave mesh-type, punched-type, or expanded-type, a metal foam, or the like.

Nickel is the preferable material for the porous electrode.

It is preferable that the anode and/or cathode are/is made of nickel in material; the anode and/or cathode are/is at least one porous body selected from a group consisting of metal foams, plain weave mesh-type porous bodies, punched-type porous bodies, or expanded-type porous bodies; and the porous body is disposed on the conductive elastic body.

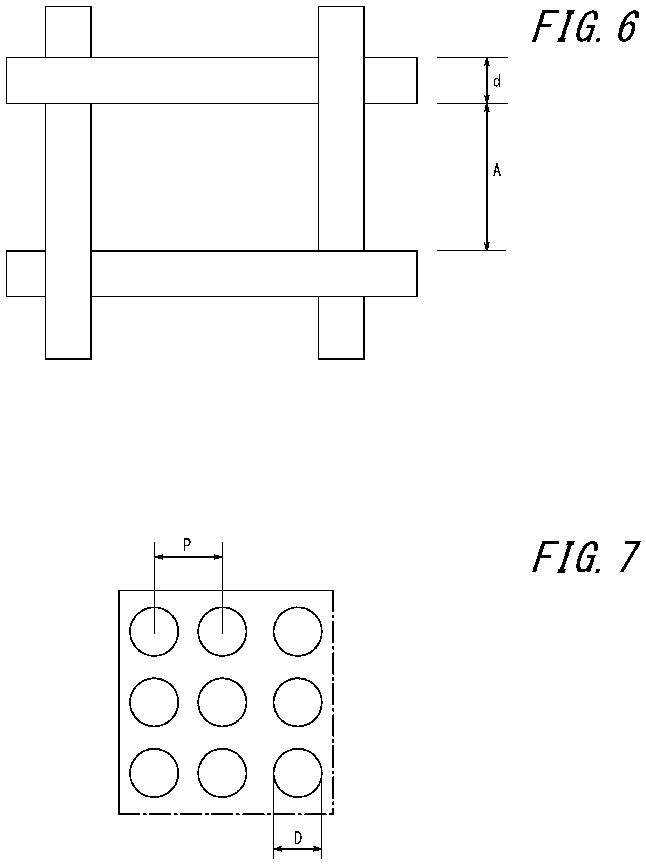

The plain weave mesh-type has a mesh structure in which wires made of metal or resin are woven so that a plurality of wires parallel in one direction intersect one another with a plurality of wires parallel in another direction, maintaining a certain spacing. FIG. 6 illustrates, in enlargement, an aperture of an example of a plain weave mesh-type porous electrode.

The shape of the aperture of the plain weave mesh-type, when observed from a vertical direction with the aperture as a plane, is a parallelogram formed by a pair of two adjacent wires parallel in one direction and a pair of two adjacent wires parallel in another direction intersection one another, and may be a square, rectangle, or rhombus shape.

In the present embodiment, when a plain weave mesh-type porous electrode is used, the dimensions are not particularly limited, but in order to achieve both an increase in gas generation due to an increase in electrolytic surface area and efficient removal of gas generated by electrolysis from the surface of the electrode, a mesh opening (A) can be 0.1 mm or more and 5.0 mm or less, and preferably 0.2 mm or more and 4.0 mm or less, and more preferably 0.3 mm or more and 3.0 mm or less.

The mesh opening (A) refers to an average of the perpendicular distance between a pair of adjacent parallel wires and the perpendicular distance between the other pair of adjacent parallel wires, of the four wires constituting the plain weave mesh-type aperture, as illustrated in FIG. 6. When the mesh opening (A) differs between the apertures in one substrate, the mesh opening (A) shall be an average.

The mesh opening can be calculated using the following equation from a wire diameter and the number of meshes, as described below.

$$\text{Mesh opening} = (25.4 \ / \ \text{number of meshes}) - \text{wire diameter}$$

In the present embodiment, there are no limitations on dimensions other than the mesh opening, but the wire diameter is preferably 0.05 mm or more and 1.0 mm or less, and the number of meshes is preferably 5 or more and 70 or less. The wire diameter is more preferably 0.1 mm or more and 0.3 mm or less, and the number of meshes is more preferably 10 or more and 65 or less. As illustrated in FIG. 6, the wire diameter is the diameter of wires that make up the plain weave mesh-type. The number of meshes is the number of mesh cells per inch (25.4 mm) and can be determined by the following equation.

$$\text{Number of meshes} = 25.4 \ / \ (\text{mesh opening} + \text{wire diameter})$$

The punched-type is a net-like structure in which a plurality of round or angular punch holes are formed at regular intervals in a plate made of metal, resin, or the like. The shape of the punch holes is not particularly limited, but from the viewpoint of mechanical strength, circular shape is preferable, and true circular shape is more preferable. FIG. 7 illustrates a plan view of an example of a punched-type porous electrode.

In the present embodiment, when the punched-type porous electrode is used, the dimensions are not particularly limited, but a hole diameter (D) can be 0.5 mm or more and 12.0 mm or less, and a pitch (P) between the holes can be 0.5 mm or more and 15 mm or less, in order to achieve both an increase in the amount of generated gas due to an increase in an electrolytic surface area and efficient removal of gas generated by electrolysis from the surface of the electrode. The hole diameter (D) is preferably 1.0 mm or more and 10.0 mm or less, and the pitch (P) between the holes is preferably 1.0 mm or more and 10.0 mm or less. The hole diameter (D) is more preferably 1.5 mm or more and 8.0 mm or less, and the pitch (P) between the holes is more preferably 1.5 mm or more and 8.0 mm or less.

The hole diameter (D) refers to a diameter when the punch hole is a perfect circle, and an average of a major axis diameter and a minor axis diameter when the punch hole is an oval. The pitch (P) between the holes refers to the distance between the centers of one punch hole and the nearest punch hole. In other words, it is the shortest distance of distances from the centers of multiple punch holes adjacent to one punch hole to the center of the one punch hole. When the hole diameter (D) and the pitch (P) between the holes differ in one substrate, averages shall be used.

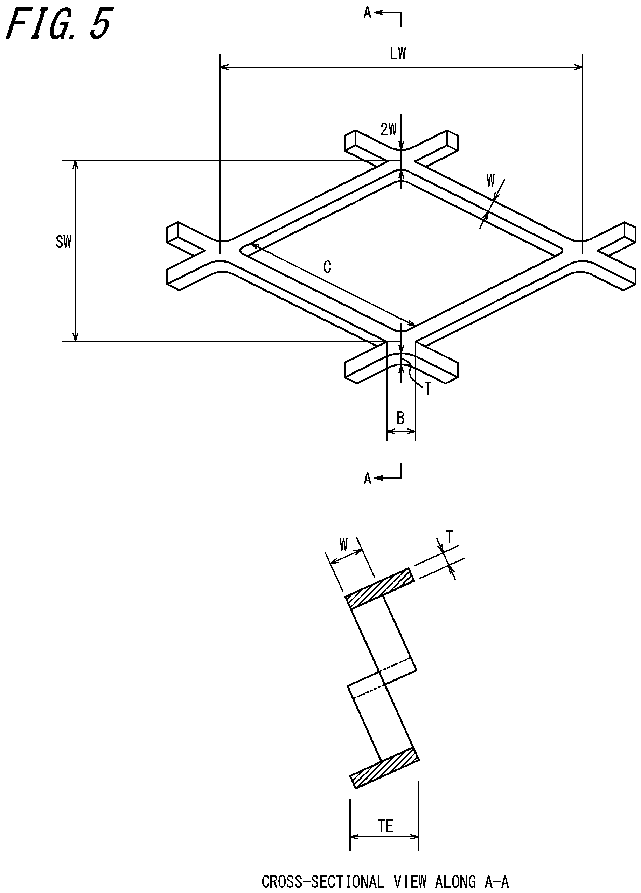

The expanded-type is a mesh-like structure in which rhombic apertures are formed by expanding a plate made of metal, resin, or the like while making staggered cuts in the plate. The "rhombus" in the expanded-type refers to a parallelogram whose four sides are equal in length, whose diagonals are orthogonal to each other, and one of four interior angles is more than 0° and less than 180°. It shall also include a case in which one of the interior angles is 90°, i.e., a "square". FIG. 5 illustrates a plan view and cross-sectional view in which an aperture of an example of an expanded-type porous electrode is enlarged.

When an expanded-type porous electrode is used in the present embodiment, the dimensions are not particularly limited, but in order to achieve both an increase in gas generation due to an increase in electrolytic surface area and efficient removal of gas generated by electrolysis from the surface of the electrode, the distance (LW) between the centers of the meshes in a long mesh opening direction can be 1.0 mm or more and 10.0 mm or less, and the distance (SW) between the centers of the meshes in a short mesh opening direction can be 0.5 mm or more and 8.0 mm or less. LW is preferably 2.0 mm or more and 6.0 mm or less, and SW is preferably 1.0 mm or more and 5.0 mm or less. LW is more preferably 3.0 mm or more and 5.0 mm or less, and SW is more preferably 1.0 mm or more and 4.0 mm or less.

The distance (LW) between the centers of the meshes in the long mesh opening direction refers to the longest distance between the centers of adjacent bonds (mesh intersections) when the aperture is observed from a vertical direction as a plane. The distance (SW) between the centers of the meshes in the short mesh opening direction refers to the shortest distance between the centers of bonds adjacent at right angle to LW. When LW and SW differ among meshes in one substrate, averages shall be used.

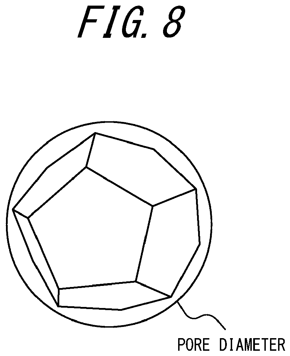

When a metal foam is used as the porous electrode, the dimensions are not particularly limited, but in order to achieve both an increase in the amount of gas generation due to an increase in electrolytic surface area and efficient removal of gas generated by electrolysis from the surface of the electrode, a porosity is preferably 50% or more and 95% or less, and the pore diameter of the metal foam is preferably 0.1 mm or more and 10 mm or less, and more preferably 0.4 mm or more and 5 mm or less. FIG. 8 illustrates, in enlargement, an aperture of an example of the metallic foam porous electrode.

In the present embodiment, a surface aperture ratio of the porous electrode is not particularly limited, but from the viewpoint of improving electrolytic efficiency, can be, for example, 8% or more and 85% or less, preferably 30% or more and 80% or less, more preferably 31% or more and 70% or less, and even more preferably 35% or more and 65% or less.

The surface aperture ratio of the porous electrode indicates a ratio of pore portions to a surface of the porous electrode. The surface aperture ratio of the porous electrode can be determined as a ratio of pores occupying the surface of the electrode by imaging a measurement sample with a scanning electron microscope (SEM) from a vertical direction of the surface of the electrode.

The thickness of the porous electrode is not particularly limited, but from the viewpoint of achieving both mechanical strength and efficient removal of gas generated by electrolysis from the surface of the electrode, is preferably of the order of 0.2 mm to 5 mm, and more preferably of the order of 0.5 mm to 3 mm.

The elastic modulus of the anode is preferably 0.01 GPa or more and 200 GPa or less. From the viewpoint of flexure of the electrode, the elastic modulus of the anode is more preferably 0.1 GPa or more, and even more preferably 1 GPa or more. Since some flexibility facilitates maintaining the zero-gap structure even when heat or pressure fluctuations occur in operating environment, the elastic modulus of the anode is more preferably 100 GPa or less, and even more preferably 80 GPa or less.

The elastic modulus of the cathode is preferably 0.01 GPa or more and 200 GPa or less. From the viewpoint of flexure of the electrode, the elastic modulus of the cathode is more preferably 0.1 GPa or more, and even more preferably 1 GPa or more. From the viewpoint of maintaining the zero-gap structure, the elastic modulus of the cathode is more preferably 100 GPa or less, and even more preferably 80 GPa or less.

The flexural rigidity of the anode is preferably 0.1 kN·mm$^2$ or more and 200 kN·mm$^2$ or less. From the viewpoint of flexure of the electrode, the flexural rigidity of the anode is more preferably 1 kN·mm$^2$ or more, and even more preferably 5 kN·mm$^2$ or more. Since some flexibility facilitates maintaining the zero-gap structure even when heat or pressure fluctuations occur in operating environment, the flexural rigidity of the anode is more preferably 150 kN·mm$^2$ or less, and even more preferably 100 kN·mm$^2$ or less.

The flexural rigidity of the cathode is preferably 0.1 kN·mm$^2$ or more and 200 kN·mm$^2$ or less. From the viewpoint of flexure of the electrode, the flexural rigidity of the cathode is more preferably 1 kN·mm$^2$ or more, and even more preferably 5 kN·mm$^2$ or more. From the viewpoint of maintaining the zero-gap structure, the flexural rigidity of the cathode is more preferably 150 kN·mm$^2$ or less, and even more preferably 100 kN·mm$^2$ or less.

The elastic modulus and flexural rigidity of the electrodes can be calculated using a tensile tester. More specifically, the elastic modulus and flexural rigidity can be measured by a method described in examples below.

The porous electrode according to the present embodiment can be a base material itself or have a catalyst layer with high reaction activity on a surface of the base material.

As the porous electrode, one type of porous body may be used from the above electrodes having a mesh structure such as plain weave mesh-type, punched-type, and expanded-type, the metal foam, and the like, or two or more types of porous bodies with different thicknesses, pore diameters, and structures may be used. For example, as the anode or the cathode, a porous body with a catalyst layer may be used as a first electrode and a porous body without a catalyst layer may be used as a second electrode, and the two types of porous bodies may be stacked.

In the present embodiment, when the porous electrode is made only of a base material, the average pore diameter and surface aperture ratio described above for the porous electrode are for a surface of the base material.

In the present embodiment, when the porous electrode has a base material and a catalyst layer covering a surface of the base material, the average pore diameter and surface aperture ratio described above for the porous electrode are for a surface of the electrocatalyst layer.

A material of the base material is not particularly limited, and may be at least one type of conductive base material selected from a group consisting of nickel, iron, mild steel, stainless steel, vanadium, molybdenum, copper, silver, manganese, platinum group metals, graphite, chromium, or the like. A conductive base material made of an alloy of two or more types of metals or a mixture of two or more types of conductive materials may be used. Nickel, a nickel-based alloy, or the like is particularly preferable from the viewpoint of the conductivity of the base material and resistance to operating environment.

The catalyst layer of the anode preferably has a high oxygen generating capacity, and nickel, cobalt, iron, platinum group elements, or the like can be used. These can form the catalyst layer as a single metal, a compound such as an oxide, a composite oxide or alloy consisting of multiple metal elements, or a mixture thereof, in order to achieve desired activity and durability. An organic material such as a polymer may be included to improve durability and adhesion to the base material.

The catalyst layer of the cathode preferably has a high hydrogen generating capacity, and nickel, cobalt, iron, platinum group elements, or the like can be used. These can form the catalyst layer as a single metal, a compound such as an oxide, a composite oxide or alloy consisting of multiple metal elements, or a mixture thereof, in order to achieve desired activity and durability. An organic material such as a polymer may be included to improve durability and adhesion to the base material.

As a method for forming the catalyst layer on the base material, plating, thermal spraying such as plasma spraying, pyrolysis in which a precursor layer solution is applied to the base material and then heat is applied, immobilization of the catalytic substance mixed with binder components on the base material, or vacuum deposition such as sputtering can be used.

In the zero-gap structure, the membrane is pressed against the electrodes more strongly than in conventional electrolytic cells. For example, in an electrode using the expanded-type base material, the membrane may break at edges of the apertures, or the membrane may cut into the apertures, and therefore a gap is created between the cathode and the membrane and voltage may rise.

To solve the above problem, the shape of the electrode should be as flat as possible. For example, the method of pressing an expanded base material (for example, expanded-type base material) with a roller to form a flat shape can be applied. In this case, it is desirable to press and flatten the expanded-type base material to 95% to 110% relative to an original metal flat thickness before an expansion process.

The electrode manufactured with the above treatment not only prevents damage to the membrane, but also, surprisingly, reduces voltage. The reason for this is not clear, but it is expected that uniform contact between a surface of the membrane and the surface of the electrode results in an equalization of current density.

The size of the electrode is not particularly limited, and may be determined in accordance with the shapes and sizes of the bipolar zero-gap electrolyzer for water electrolysis, electrolytic cell, bipolar element, partition wall, and the like as described below, as well as desired electrolytic capacity. For example, when the partition wall is in a plate shape, the size of the electrode may be determined according to the size of the partition wall.

[Current Collector]

In the bipolar zero-gap electrolyzer for water electrolysis according to the present embodiment, a current collector is preferably disposed between the conductive elastic body and the conductive partition wall, and the contact resistance of the current collector is preferably 1 m$\Omega$cm$^2$ or more and 150 m$\Omega$cm$^2$ or less. The current collector is preferably disposed at least one of locations each between the conductive elastic body and the conductive partition wall in the electrolyzer, and more preferably disposed between every location between the conductive elastic body and the conductive partition wall. By disposing the current collector between the conductive elastic body and the conductive partition wall, the compressibility of the conductive elastic body can be made more uniform, and the cathode, membrane, and anode can be adhered more uniformly, forming a more favorable zero-gap structure.

From the viewpoint of formation of the electron conductive path, the contact resistance of the current collector is preferably 150 m$\Omega$cm$^2$ or less, more preferably 100 m$\Omega$cm$^2$ or less, and even more preferably 50 m$\Omega$cm$^2$ or less. From the viewpoint of the thickness of the current collector and the surface aperture ratio, the contact resistance of the current collector is preferably 1 m$\Omega$cm$^2$ or more, more preferably 10 m$\Omega$cm$^2$ or more, and even more preferably 15 m$\Omega$cm$^2$ or or more. Specifically, the contact resistance of the current collector is calculated by a method described below.

From the viewpoint of formation of the electron conductive path and ease of assembly, the conductive elastic body and the current collector are preferably integrated by spot welding or the like.

A material of the current collector is preferably a conductive porous body from the viewpoint of defoaming of generated gas. The conductive porous body is not particularly limited, but from the viewpoint of controlling an average pore diameter, may be a porous body with a mesh-like structure such as plain weave mesh-type, punched-type, or expanded-type, a metal foam, or the like.

The material of the current collector is preferably a conductive porous body with a nickel or nickel-plated layer, from the viewpoint of chemical resistance.

The surface aperture ratio of the current collector is not particularly limited, but from the viewpoint of defoaming, can be, for example, 8% or more and 85% or less, preferably 30% or more and 80% or less, more preferably 31% or more and 70% or less, and even more preferably 35% or more and 65% or less.

The surface aperture ratio of the current collector indicates a ratio of pore portions to a surface of the current collector. The surface aperture ratio of the current collector can be determined as a ratio of pores occupying the surface of the current collector by imaging a measurement sample with a scanning electron microscope (SEM) from a vertical direction of the surface of the current collector.

The thickness of the current collector is not particularly limited, but from the viewpoint of achieving both mechanical strength and good defoaming of gas generated by electrolysis, is preferably of the order of 0.2 mm to 5 mm, and more preferably of the order of 0.5 mm to 3 mm.

The elastic modulus of the current collector is preferably 0.01 GPa or more and 200 GPa or less. From the viewpoint of flexure of the current collector, the elastic modulus of the current collector is more preferably 0.1 GPa or more, and even more preferably 1 GPa or more. Since some flexibility facilitates maintaining the zero-gap structure even when heat or pressure fluctuations occur in operating environment, the elastic modulus of the current collector is more preferably 100 GPa or less, and even more preferably 80 GPa or less.

The flexural rigidity of the current collector is preferably 0.1 kN·mm$^2$ or more and 200 kN·mm$^2$ or less. From the viewpoint of flexure of the current collector, the flexural rigidity of the current collector is more preferably 1 kN·mm$^2$ or more, and even more preferably 5 kN·mm$^2$ or more. Since some flexibility facilitates maintaining the zero-gap structure even when heat or pressure fluctuations occur in operating environment, the flexural rigidity of the current collector is more preferably 150 kN·mm$^2$ or less, and even more preferably 100 kN·mm$^2$ or less.

The conductive partition wall has the protrusions, concavities, and flat portions on surfaces, and the protrusions are disposed on one surface and the concavities are disposed on a surface opposite the one surface. The conductive elastic body is disposed between the surface of the conductive partition wall on a side with the concavities and the electrode. Furthermore, the current collector is disposed between the conductive elastic body and the partition wall. Therefore, the conductive elastic body is prevented from falling into the concavities. The compressibility of the conductive elastic body can be made more uniform. The cathode, membrane, and anode can be adhered more uniformly, and a more desirable zero-gap structure can be formed.

[Membrane]

In the bipolar zero-gap electrolyzer for water electrolysis according to the present embodiment, the membrane is provided between the anode chamber and the cathode chamber of the adjacent bipolar elements (FIGS. 3A to 3C).

As the membrane, an ion-permeable membrane is used to permeate ions while isolating generated hydrogen gas and oxygen gas. The ion-permeable membrane can be made of an ion-exchange membrane with ion exchange capacity and a porous membrane that can permeate the electrolyte. The ion-permeable membrane should have low gas permeability, high ion conductivity, low electronic conductivity, and high strength.

-- Porous Membrane --

The porous membrane has a structure with multiple microscopic through holes that allow the electrolyte to permeate through the membrane. Since ionic conduction occurs when the electrolyte permeates through the porous membrane, control of a porous structure, such as pore diameter, porosity, and hydrophilicity, is very important. On the other hand, it is required that not only the electrolyte but also the generated gases cannot pass through the membrane, i.e., the membrane is required to have high gas barrier properties. From this point of view, control of the porous structure is also important.

As the porous membrane, which has the multiple microscopic through holes, there are polymer porous membranes, inorganic porous membranes, woven fabrics, nonwoven fabrics, and the like. These can be fabricated by known technology.

Examples of a manufacturing method for the polymer porous membrane include phase conversion (microphase separation), extraction, stretching, wet gel stretching, and the like.

The porous membrane preferably contains a polymeric material and hydrophilic inorganic particles. The presence of the hydrophilic inorganic particles can impart hydrophilicity to the porous membrane.

--- Polymer Material ----

The polymer material includes, for example, polysulfone, polyethersulfone, polyphenylsulfone, polyvinylidene fluoride, polycarbonate, tetrafluoroethylene perfluoroalkyl vinyl ether copolymers, tetrafluoroethylene-ethylene copolymers, polyvinylidene fluoride, polytetrafluoroethylene, perfluorosulfonic acid, perfluorocarboxylic acid, polyethylene, polypropylene, polyphenylene sulfide, polyparaphenylene benzobisoxazole, polyketone, polyimide, polyetherimide, and the like. Among these, polysulfone, polyethersulfone, polyphenylsulfone, polyphenylene sulfide, and polytetrafluoroethylene are preferable, and polysulfone is more preferable. These may be used singly or in combination.

It is desirable to control the pore diameter of the porous membrane in order to obtain appropriate membrane properties such as separation capacity and strength. When the porous membrane is used in alkaline water electrolysis, the pore diameter of the porous membrane should be controlled to prevent mixing of oxygen gas generated from the anode and hydrogen gas generated from the cathode, and to reduce voltage loss during electrolysis.

The larger the average pore diameter of the porous membrane, the larger the permeation of the porous membrane per unit area, and especially in electrolysis, the better the ion permeability of the porous membrane, facilitating reduction in voltage loss. In addition, the larger the average pore diameter of the porous membrane, the smaller the surface area in contact with alkaline water, which tends to suppress polymer degradation.

On the other hand, the smaller the average pore diameter of the porous membrane, the higher the separation accuracy of the porous membrane, and the better the gas barrier properties of the porous membrane tend to be in electrolysis. Furthermore, when hydrophilic inorganic particles with small particle diameters, as described below, are supported on the porous membrane, the hydrophilic inorganic particles can be held firmly without missing. This allows the porous membrane to have a high retention capacity of the hydrophilic inorganic particles and to maintain the effect over a long period of time.

From this viewpoint, the average pore diameter for the above porous membrane is preferably in the range of 0.1 to 1.0 $\mu$m. When the pore diameter is in this range, the porous membrane can achieve both excellent gas barrier properties and high ion permeability. The pore diameter of the porous membrane should be controlled in a temperature range in which the porous membrane is actually used. Thus, for example, when the porous membrane is used as a membrane 4 for electrolysis in an environment of 90°C, it is preferable to satisfy the above pore diameter range at 90°C. It is more preferable that the porous membrane, as a membrane 4 for alkaline water electrolysis, should have an average pore diameter of 0.1 to 0.5 $\mu$m as the range of expressing more excellent gas barrier properties and high ion permeability.

The average pore diameter of the porous membrane can be measured by the following method.

The average pore diameter of a porous membrane refers to an average permeation pore diameter measured by the following method using an integrity tester ("Sartocheck Junior BP-Plus" made by Sartorius Stedim Japan K.K.). First, the porous membrane is cut into a predetermined size, including a core material, and this is used as the sample. This sample is set in any pressure-resistant container and the container is filled with pure water. Next, the pressure-resistant container is held in a thermostatic bath set at a predetermined temperature, and measurement is started after the inside of the pressure-resistant container reaches the predetermined temperature. Once the measurement begins, a top side of the sample is pressurized with nitrogen, and pressure and permeation flow rate values are recorded as the pure water permeates through from a bottom side of the sample. The average permeation pore diameter can be calculated from the following Hagen-Poiseuille equation using the gradient between pressure and a permeation flow rate between 10 kPa and 30 kPa.

$$\text{Average permeation pore diameter (m)} = \{32\eta L\mu_0 / (\varepsilon P)\}^{0.5}$$

where $\eta$ (Pa·s) is the viscosity of water, L (m) is the thickness of the porous membrane, $\mu_0$ is apparent flow velocity and $\mu_0$ (m/s) = flow rate ($m^3$/s) / flow path area ($m^2$). In addition, $\varepsilon$ is porosity and P (Pa) is pressure.

For the membrane for alkaline water electrolysis, it is preferable to control the porosity of the porous membrane from the viewpoints of high gas barrier properties, maintenance of high hydrophilicity, prevention of degradation in ion permeability due to bubble adhesion, and stable electrolysis performance (low voltage loss and the like) over a long time.

From the viewpoint of achieving both high gas barrier properties and low voltage loss at high levels, the lower limit of porosity of the porous membrane is preferably 30% or more, more preferably 35% or more, and even more preferably 40% or more. The upper limit of porosity is preferably 70% or less, more preferably 65% or less, and even more preferably 55% or less. When the porosity of the porous membrane is equal to or less than the above upper limit, ions can easily permeate through the membrane and the voltage loss of the membrane can be suppressed.

The porosity of the porous membrane refers to open porosity determined by the Archimedes method, which can be calculated by the following equation.

$$\text{Porosity P (\%)} = \rho / (1 + \rho) \times 100$$

where $\rho = (W3 - W1) / (W3 - W2)$. W1 (g) is the dry mass of the porous membrane. W2 (g) is the submerged mass of the porous membrane, and W3 (g) is the saturated mass of the porous membrane.

To measure the porosity, the porous membrane is washed with pure water and cut into three 3 cm $\times$ 3 cm pieces to make measurement samples. First, W2 and W3 of the samples are measured. Then, the porous membrane is left to dry in a dryer set at 50°C for at least 12 hours, and W1 is measured. Then, the porosity is determined from the values of W1, W2, and W3. The porosity is determined for each of the three samples, and the porosity P is their arithmetic mean value.

The thickness of the porous membrane is not particularly limited, but is preferably 100 to 700 $\mu$m, more preferably 100 to 600 $\mu$m, and even more preferably 200 to 600 $\mu$m.

When the thickness of the porous membrane is equal to or more than the lower limit described above, the porous membrane is difficult to break by puncture or the like, and short-circuiting between the electrodes is difficult to occur. Also, gas barrier properties are good. When the thickness is equal to or less than the upper limit described above, voltage loss is less likely to increase. Also, the effect of variations in the thickness of the porous membrane is reduced.

When the thickness of the membrane is 100 $\mu$m or more, the membrane is difficult to break by puncture or the like, and short-circuiting between the electrodes is difficult to occur. Also, gas barrier properties are good. When the thickness is 600 $\mu$m or less, the voltage loss is less likely to increase. The effect of variations in the thickness of the porous membrane is also reduced.

When the thickness of the porous membrane is 250 $\mu$m or more, the gas barrier properties are further improved and the strength of the porous membrane against impact is further enhanced. From this viewpoint, the lower limit of the thickness of the porous membrane is more preferably 300 $\mu$m or more, even more preferably 350 $\mu$m or more, and even further more preferably 400 $\mu$m or more. On the other hand, when the thickness of the porous membrane is 700 $\mu$m or less, ion permeability is less likely to be inhibited by the resistance of the electrolyte contained in the pores during operation, and superior ion permeability can be maintained. From this viewpoint, the upper limit of the thickness of the porous membrane is more preferably 600 $\mu$m or less, even more preferably 550 $\mu$m or less, and even further more preferably 500 $\mu$m or less.

--- hydrophilic inorganic particles ---

The porous membrane preferably contains hydrophilic inorganic particles to develop high ion permeability and high gas barrier properties. The hydrophilic inorganic particles may be attached to the surfaces of the porous membrane or partially embedded in the polymer material that constitutes the porous membrane. When the hydrophilic inorganic particles that are encapsulated in pores of the porous membrane are less likely to be detached from the porous membrane and the performance of the porous membrane can be maintained for a long time.

The hydrophilic inorganic particles include, for example, at least one inorganic material selected from a group consisting of oxides or hydroxides of zirconium, bismuth, or cerium; oxides of Group IV elements of the Periodic Table; nitrides of Group IV elements of the Periodic Table; or carbides of Group IV elements of the Periodic Table. Among these, from the viewpoint of chemical stability, the oxide of zirconium, bismuth, or cerium or the oxide of a group IV element of the Periodic Table is more preferable, the oxide of zirconium, bismuth, or cerium is even more preferable, and zirconium oxide is even further more preferable.

The form of the hydrophilic inorganic particles should be in the form of microparticles.

-- Porous Support --

When a porous membrane is used as the membrane, the porous membrane may be used together with a porous support. Preferably, the porous membrane is structured with an internal porous support. More preferably, the porous membranes are laminated on both sides of the porous support. The porous membranes may be symmetrically laminated on both sides of the porous support.

The porous support includes, for example, meshes, porous membranes, nonwoven fabrics, woven fabrics, composite fabrics containing nonwoven fabrics and woven fabrics inherent in these nonwoven fabrics, and the like. These may be used alone or in combination of two or more types. More suitable forms of the porous support include, for example, mesh base material composed of monofilaments of polyphenylene sulfide, composite fabrics including nonwoven fabrics and woven fabrics inherent in the nonwoven fabrics, and the like.

-- Ion-exchange membrane --

The ion-exchange membrane includes a cation-exchange membrane that selectively transmits cations and an anion-exchange membrane that selectively transmits anions, and either type of exchange membrane can be used.

The material of the ion-exchange membrane is not particularly limited, and any known material can be used. For example, a fluorinated resin or a modified resin of a polystyrene divinylbenzene copolymer can be suitably used. A fluorine-containing ion-exchange membrane is especially preferable in terms of superior heat resistance, chemical resistance, and the like.

As the fluorine-containing ion-exchange membrane, there is one that selectively permeates ions generated during electrolysis and contains a fluorine-containing polymer with ion-exchange groups, or the like. The fluorine-containing polymer with the ion-exchange groups refers to a fluorine-containing polymer containing ion-exchange groups or ion-exchange group precursors that can become ion-exchange groups through hydrolysis. For example, there is a polymer that has a fluorinated hydrocarbon main chain, has a functional group that can be converted to an ion-exchange group by hydrolysis or the like as a pendant side chain, and can be melt-processed.

The molecular weight of the fluorine-containing copolymer with ion-exchange groups is not particularly limited, but is preferably 0.05 to 50 (g/10 minutes) and more preferably 0.1 to 30 (g/10 minutes), in a melt flow index (MFI) value compliant with ASTM:D1238 (measurement conditions: temperature 270°C, load 2160 g).

The ion-exchange groups that the ion-exchange membrane has includes cation-exchange groups such as sulfonic acid, carboxylic acid, and phosphoric acid groups, and anion-exchange groups such as quaternary ammonium groups.

Excellent ion-exchange capacity and hydrophilicity can be applied to the ion-exchange membrane by adjusting the equivalent weight EW of the ion-exchange groups. It can also be controlled to have many smaller clusters (minute portions of ion-exchange groups coordinating and/or adsorbing water molecules), which tends to improve alkali resistance and ion selective permeability.

The equivalent weight EW can be measured by salt displacement of the ion-exchange membrane and back titrating the solution with an alkali or acid solution. The equivalent weight EW can be adjusted by the copolymerization ratio of monomers as raw materials, selection of monomer species, and the like.

The equivalent weight EW of the ion-exchange membrane is preferably 300 or more in terms of hydrophilicity and water resistance of the membrane, and is preferably 1300 or less in terms of hydrophilicity and ion exchange capacity.

The thickness of the ion-exchange membrane is not particularly limited, but from the viewpoint of ion permeability and strength, a range of 5 to 300 μm is preferable.

Surface treatment may be applied to improve the hydrophilicity of surfaces of the ion-exchange membrane. Specifically, there are a method of coating the hydrophilic inorganic particles such as zirconium oxide, a method of imparting microscopic irregularities to the surfaces, and the like.

The ion-exchange membrane is preferably used with a reinforcement material from the viewpoint of the strength of the membrane. The reinforcement material is not particularly limited, and includes general nonwoven or woven fabrics and porous membranes made of various materials. In this case, a PTFE-based membrane that has been stretched and made porous is preferable, although there is no particular limitation on the porous membrane.

Although any of these membranes can be used without limitation in the bipolar zero-gap electrolyzer for water electrolysis according to the present embodiment, the membrane is preferably a porous membrane from the viewpoint of cost reduction.

(Bipolar Zero Gap Electrolyzer for Water Electrolysis)

An example of the bipolar zero-gap electrolyzer for water electrolysis according to the present embodiment, with the conductive partition wall, conductive elastic body, cathode, anode, and membrane described above, will be described below with reference to the drawings.

The bipolar zero-gap electrolyzer for water electrolysis according to the present embodiment is not limited to the one described below. Also, components other than the anode, cathode, and membrane included in the bipolar zero-gap electrolyzer for water electrolysis are not limited to those listed below, but well-known ones can be selected, designed, or the like for use, as appropriate.

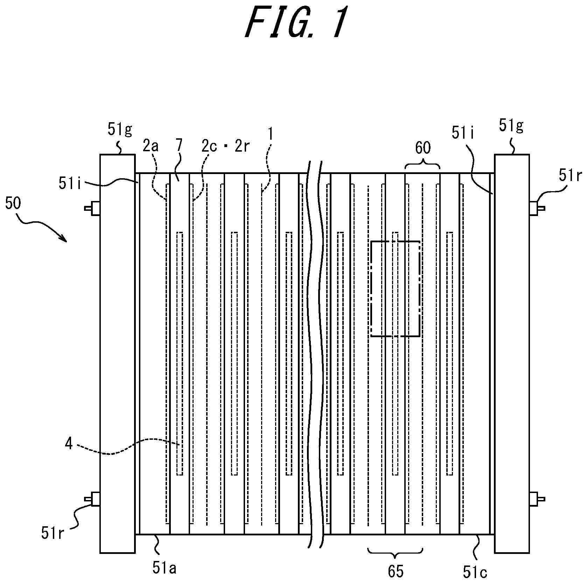

FIG. 1 is a side view illustrating an overall of an example of the bipolar zero-gap electrolyzer for water electrolysis according to the present embodiment.

As illustrated in FIG. 1, the bipolar zero-gap electrolyzer for water electrolysis according to the present embodiment is a bipolar electrolyzer 50 in which a plurality of bipolar elements 60, each of which includes an anode, a cathode, a conductive partition wall partitioning an anode chamber with the anode and a cathode chamber with the cathode, and outer frames framing the conductive partition wall, are stacked so as to sandwich membranes therebetween. The outer frames 3 may be provided along outer edges of the partition wall 1 so as to surround the partition wall 1. The adjacent bipolar elements should be insulated from each other. For example, the adjacent bipolar elements should be electrically insulated by adjoining the outer frames to each other or adjoining the bipolar elements via gaskets. The conductive partition wall may also serve as the outer frames. The outer frames and gaskets may be insulating.

((Bipolar Element))

The bipolar element 60 used in the example of the bipolar zero-gap electrolyzer for water electrolysis includes a partition wall 1 that partitions an anode 2a from cathodes 2c and 2r and outer frames 3 framing the partition wall 1. More specifically, the partition wall 1 is electrically conductive. The outer frames 3 are provided along outer edges of the partition wall 1 so as to surround the partition wall 1.

In the present embodiment, as illustrated in FIG. 1, the bipolar electrolyzer 50 is configured by stacking a required number of bipolar elements 60.

In the example illustrated in FIG. 1, the bipolar electrolyzer 50 includes, from one end thereof, a fast head 51g, an insulating plate 51i, and an anode terminal element 51a that are arranged in order, and further includes an anode-side gasket part 7, a membrane 4, a cathode-side gasket part 7, and the bipolar element 60 that are arranged in this order. In this case, the bipolar element 60 is arranged such that the cathode 2c faces toward the anode terminal element 51a. The components from the anode-side gasket part 7 to the bipolar element 60 are repeatedly arranged as many as required for designed production quantity. After the components from the anode-side gasket part 7 to the bipolar element 60 are arranged repeatedly as many as required, another anode-side gasket part 7, membrane 4, and cathode-side gasket part 7 are arranged again, and finally another cathode terminal element 51c, insulating plate 51i, and loose head 51g are arranged in this order. In FIG. 1, the dashed rectangular box indicates a zero-gap structure portion inside the electrolytic cell.

The bipolar zero-gap electrolyzer for water electrolysis according to the present embodiment should adopt a hydraulic control, as a fastening method. The entire bipolar electrolyzer 50 is tightened by tie rods 51r (see FIG. 1) or a tightening mechanism of a hydraulic cylinder system or the like to be integrated into the bipolar electrolyzer 50.

From the viewpoint of maintaining constant seal surface pressure even during internal pressure fluctuations and suppressing gas leakage, the tightening method should be hydraulically controlled. The hydraulic control can be, for example, controlled by a hydraulic clamping means provided in the electrolyzer. The clamping means may be formed, for example, by a cylinder (for example, a hydraulic cylinder), a shut-off valve, a relief valve (for example, a hydraulic relief valve), a tank (for example, an oil tank), a pump (for example, a hydraulic pump), or the like.

From the viewpoint of sealing performance of the gaskets, stack pressure is preferably 0.5 MPa or more. From the viewpoint of durability, the stack pressure is preferably 100 MPa or less. The stack pressure may be defined as surface pressure applied between any adjacent bipolar elements.

The arrangement of the components constituting the bipolar electrolyzer 50 can be arbitrarily selected from either the side of the anode 2a or the side of the cathodes 2c and 2r, and is not limited to the order described above.

As illustrated in FIG. 1, in the bipolar electrolyzer 50, the bipolar elements 60 are arranged between the anode terminal element 51a and the cathode terminal element 51c. The membranes 4 are arranged between the anode terminal element 51a and the bipolar element 60, between the adjacently arranged bipolar elements 60, and between the bipolar element 60 and the cathode terminal element 51c.

In the bipolar electrolyzer 50 according to the present embodiment, the partition walls 1, the outer frames 3, the membranes 4, and the gaskets 7 define electrode chambers through which an electrolyte passes. For example, portions partitioned by the conductive partition wall 1, the outer frames 3 (not illustrated in FIG. 1) provided at the edges of the partition wall, the gaskets 7, and the membranes 4 may be designated as the electrode chambers. The electrode chamber with the cathode 2c may be designated as a cathode chamber 5c, and the electrode chamber with the anode 2a may be designated as an anode chamber 5a (FIGS. 3A to 3C). For example, in the cathode chamber 5c, the conductive partition wall 1, conductive elastic body 2e, cathodes 2r and 2c (for example, first cathode 2c and second cathode 2r), and membrane 4 may be stacked adjacent to each other (FIG. 3B), or the conductive partition wall 1, current collector 2x, conductive elastic body 2e, cathode 2c, and membrane 4 may be stacked adjacent to each other (FIG. 3C).

The bipolar zero-gap electrolyzer for water electrolysis according to the present embodiment should have the membranes sandwiched between both the electrodes by elastic stress of the conductive elastic bodies.

The bipolar zero-gap electrolyzer for water electrolysis according to the present embodiment should have the membranes sandwiched between the cathode and anode of the adjacent bipolar elements by elastic stress of the conductive elastic bodies (FIGS. 3A to 3C). For example, when the conductive elastic bodies are arranged in the cathode and anode chambers, the membrane is preferably sandwiched between the cathode and anode that are sandwiched between the conductive elastic body in the cathode chamber of one of adjacent bipolar elements and the conductive elastic body in the anode chamber of the other bipolar element.

The above elastic stress should be between 1 and 1000 kPa at 50% compression deformation. From the viewpoint of differential pressure resistance during internal pressure fluctuations, the elastic stress at 50% compression deformation is preferably 1 kPa or more, more preferably 5 kPa or more, and even more preferably 10 kPa or more. From the viewpoint of membrane damage, the elastic stress at 50% compression deformation is preferably 1000 kPa or less, more preferably 500 kPa or less, and even more preferably 100 kPa or less. The elastic stress at 50% compression deformation can be measured by a method described in examples below. The above elastic stress can be adjusted, for example, by the type, number, thickness, or the like of the conductive elastic bodies provided in the electrolyzer.

It is preferable that the bipolar zero-gap electrolyzer for water electrolysis according to the present embodiment is provided with the gaskets and the membrane between the anode and cathode chambers of the adjacent bipolar elements, and the plurality of bipolar elements are stacked so as to sandwich the gaskets and the membrane. Between the adjacent bipolar elements, the anode chamber, gasket, membrane, gasket, and cathode chamber may be stacked in this order (FIG. 1).

In the bipolar zero-gap electrolyzer for water electrolysis according to the present embodiment, sealing of the electrolyte is achieved. The bipolar zero-gap electrolyzer preferably has a structure in which the electrolyte flowing into the anode and cathode chambers does not leak between the adjacent bipolar elements. In other words, sealing of the electrolyte between the adjacent bipolar elements should be realized. It is preferable that surface pressure is applied between the gasket and the membrane that are provided between the adjacent bipolar elements to prevent leakage of the electrolyte from between the gasket and the membrane, and surface pressure is applied between the gasket and the outer frame that are provided between the adjacent bipolar elements to prevent leakage of the electrolyte from between the gasket and the outer frame (FIGS. 3A to 3C). Each electrode chamber should be surrounded by the outer frames, and the electrolyte should not leak outside, except at a header described below.

Sealing of the electrolyte described above may be defined, for example, as the absence of electrolyte leakage between the gasket and the membrane and between the gasket and the outer frame after conducting electrolysis tests (preferably both electrolysis and fluctuation tests) described in examples below.

In the bipolar zero-gap electrolyzer for water electrolysis according to the present embodiment, the surface pressure between the gasket and the membrane and between the gasket and the outer frame may be 0.1 MPa or more and 10 MPa or less. The above surface pressure can be converted by dividing a press load by a projected area of a sealing surface. The above surface pressure can be adjusted, for example, by adjusting the press load of the electrolyzer by hydraulic pressure in the case of a hydraulic press clamping system, or by the number and torque of tie rods in the case of a tie rod clamping system. Also, by changing the shape and material of opposed members, the press load of the electrolyzer can be distributed to desired surface pressure between the members.

The bipolar electrolyzer 50 is usually equipped with the header, which is a tube that distributes or collects the electrolyte. The bipolar electrolyzer 50 has an anode inlet header that allows the electrolyte to enter into the anode chamber and a cathode inlet header that allows the electrolyte to enter into the cathode chamber, at lower portions of the outer frames at the end edges of the partition wall. Similarly, the bipolar electrolyzer 50 has an anode outlet header that allows the electrolyte to exit from the anode chamber and a cathode outlet header that allows the electrolyte to exit from the cathode chamber, at upper portions of the outer frames at the end edges of the partition wall.

Representative examples of the arrangement of the headers attached to the bipolar electrolyzer 50 illustrated in FIG. 1 are an internal header type and an external header type. Either type may be adopted in the present disclosure without any particular limitations.

In the example illustrated in FIG. 1, all of the partition wall, anode 2a, and cathodes 2c and 2r are plate-like in shape with predetermined thicknesses. However, the present disclosure is not limited to this, and the shape may be zigzag or wavy in whole or in part or may have rounded edges in cross section.

((Zero-gap Structure))

In the bipolar zero-gap electrolyzer for water electrolysis according to the present embodiment, the so-called "zero-gap structure" is formed in which the membrane is in contact with the anode and the cathode. The "zero gap structure" is a structure that can keep the anode and membrane in contact with each other and the cathode and membrane in contact with each other over the entire electrode surfaces, or that can keep a state in which there is almost no gap between the anode and membrane and between the cathode and membrane, with the distance between the electrodes being approximately the same as the thickness of the membrane over the entire electrode surfaces (FIGS. 3A to 3C).

In alkaline water electrolysis, when there is a gap between the membrane and the anode or cathode, a large amount of gas bubbles generated by electrolysis, as well as the electrolyte, accumulates in this area, resulting in extremely high electrical resistance.

On the other hand, by forming the zero-gap structure, the distance between the anode and cathode (hereinafter referred to as "distance between electrodes") can be reduced by quickly letting the generated gas escape through the pores of the electrodes to opposite sides of the electrodes from the membrane sides. This reduces voltage loss due to the electrolyte and the generation of gas accumulation near the electrodes as much as possible, thereby keeping the electrolysis voltage low.

Several means of configuring the zero-gap structure have already been proposed, such as machining the anode and cathode completely smooth and pressing the anode and the cathode together so as to sandwich the membrane, or placing an elastic body such as a spring between the electrode and the membrane and supporting the electrodes with the elastic body.

In the bipolar zero-gap electrolyzer for water electrolysis according to the present embodiment, as a means of reducing the distance between the electrodes, an elastic body (for example, conductive elastic body) may be disposed between the electrode and the partition wall, and the electrode may be support by the elastic body. When adopting such a configuration using elastic bodies, it is necessary to appropriately adjust the strength of the springs, the number of springs, the shape, and the like, as necessary, so as not to make the pressure of the electrode against the membrane nonuniform.

By strengthening the rigidity of the other electrode, which is in a pair with an electrode supported through the elastic body, a zero gap with high flatness can be formed. On the other hand, the electrode supported through the elastic body is made flexible such that the electrode is deformed when the membrane is pressed against the electrode. This absorbs unevenness caused by tolerances in the manufacturing accuracy of the electrolyzer and deformation of the electrode, thus allowing to maintain the zero-gap structure. When producing hydrogen, by making the pressure of the cathode chamber higher than that of the anode chamber, cross leakage of oxygen to the side of the cathode chamber can be suppressed and hydrogen purity can be maintained high. Therefore, it is preferable to use a rigid electrode and electrode support that can withstand high pressure in the anode chamber, and to install the elastic body in the cathode chamber.

FIGS. 3A to 3C illustrate an overview of an example of the bipolar zero-gap electrolyzer for water electrolysis according to the present embodiment. As a means of reducing the distance between the electrodes, a conductive elastic body 2e is disposed between the electrodes (for example, anode 2a and cathodes 2c and 2r) and the conductive partition wall 1, and the electrodes 2 are supported by the conductive elastic body (FIG. 3B). In FIG. 3B, the conductive elastic body 2e is provided in the cathode chamber 5c, and the conductive elastic body 2e is disposed adjacent to the conductive partition wall 1 with concavities 12 corresponding to protrusions 11. In FIG. 3C, in the cathode chamber 5c, the current collector 2x, conductive elastic body 2e, and cathode 2c are disposed adjacent to each other.

As the electrode to be disposed on the conductive elastic body 2e, at least one of a metallic foam of nickel material or a plain weave mesh-type, punched-type, or expanded-type porous body is preferably disposed. Two or more types of porous bodies with different thicknesses, pore diameters, and structures may be used as the electrodes. For example, two types of porous bodies may be used in a stack as the cathode, a thin porous body (first cathode) 2c with a small pore diameter and a thick second cathode 2r with a large pore diameter. In this case, the first cathode 2c may have a catalyst layer. The second cathode 2r should be disposed on the conductive elastic body 2e.

The other electrode (for example, anode 2a), which is in a pair with the electrode (for example, cathodes 2c and 2r) supported through the conductive elastic body 2e, is made more rigid (the rigidity of the anode is made stronger than that of the cathode), so that the structure is less deformed by pressing. On the other hand, the electrode (for example, cathodes 2c and 2r) supported through the conductive elastic body is made flexible so as to be deformed when the membrane 4 is pressed against the electrode, so unevenness due to tolerances in manufacturing accuracy of the electrolyzer 50, deformation of the electrodes, and the like can be absorbed to maintain the zero-gap structure. The anode 2a forms conduction with the conductive partition wall through the protrusions 11 on the partition wall.

The conductive partition wall 1 is made of conductive metal. For example, nickel, mild steel with nickel plating, stainless steel, metal whose surface is coated with any selected from Raney nickel, porous nickel, porous nickel oxide (i.e., a metal with a coating layer), or the like can be used. From the viewpoint of low cost and high alkali resistance, the conductive partition wall 1 preferably has a nickel-plated layer.

As another aspect of the present embodiment, the conductive elastic bodies 2e may be disposed adjacent to both the surfaces of the conductive partition wall 1.

As another aspect of the present embodiment, the conductive partition wall 1 may have the protrusions 11 on both the surfaces of the conductive partition wall 1, and the conductive elastic bodies 2e may be disposed adjacent to both the surfaces of the conductive partition wall.

As another aspect of the present embodiment, the conductive partition wall 1 may have the protrusions 11 and the concavities 12 corresponding to the protrusions 11 on both the surfaces of the conductive partition wall 1, and the conductive elastic bodies 2e may be disposed adjacent to both the surfaces of the partition wall.

In the bipolar electrolyzer for water electrolysis according to the present embodiment, when there are multiple electrodes (for example, there are first and second cathodes), it is preferable that at least one of the electrodes forms conduction with the conductive partition wall via at least the protrusions and/or at least the conductive elastic body. It is more preferable that all of the electrodes form conduction with the conductive partition wall via at least the protrusions and/or at least the conductive elastic body. For example, in FIGS. 3A to 3C, only the second cathode 2r may be in conduction via the conductive elastic body 2e, or the first cathode 2c may be in conduction via the conductive elastic body 2e and the second cathode 2r.

(Alkaline Water Electrolyzer)

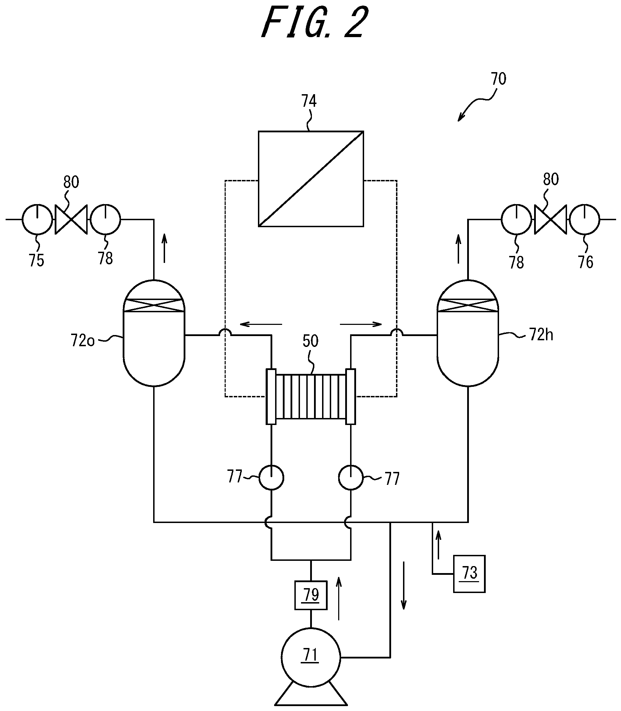

FIG. 2 illustrates an example of an alkaline water electrolysis apparatus that can use the bipolar zero-gap electrolyzer for water electrolysis according to the present embodiment.
The alkaline water electrolyzer 70 may include, in addition to the bipolar zero-gap electrolyzer 50 for water electrolysis according to the present embodiment, a tubing pump 71, gas-liquid separation tanks 72, and a water replenisher 73, as well as a rectifier 74, an oxygen concentration meter 75, a hydrogen concentration meter 76, a flow meter 77, a pressure gauge 78, a heat exchanger 79, a pressure control valve 80, and the like.

(Alkaline Water Electrolysis)

By circulating the electrolyte through the alkaline water electrolyzer equipped with the bipolar zero-gap electrolyzer for water electrolysis according to the present embodiment, highly efficient alkaline water electrolysis can be performed, while maintaining excellent electrolysis efficiency and high generated gas purity even in high density current operation.
The electrolyte that can be used in the alkaline water electrolysis according to the present embodiment may be an alkaline aqueous solution in which an alkali salt is dissolved, such as NaOH aqueous solution or KOH aqueous solution, for example.
The concentration of the alkali salt is preferably 20 mass% to 50 mass%, and more preferably 25 mass% to 40 mass%.
Among these, KOH aqueous solution of 25 mass% to 40 mass% is particularly preferable from the viewpoint of ion conductivity, kinematic viscosity, and freezing at low temperature.
The temperature of the electrolyte inside the electrolytic cells is not particularly limited, but is preferably 60°C to 130°C.
By adopting the above temperature range, high electrolysis efficiency can be maintained while effectively inhibiting thermal degradation of the components of the electrolysis apparatus, such as the gaskets and the membranes.
The temperature of the electrolyte is more preferably 85°C to 125°C, and particularly preferably 90°C to 115°C.
In the alkaline water electrolysis according to the present embodiment, current density applied to the electrolytic cells is not particularly limited, but is preferably 0.1 kA/m$^2$ to 20 kA/m$^2$, and more preferably 0.5 kA/m$^2$ to 15 kA/m$^2$.
Particularly in the case of using the fluctuating power supply, it is preferable that the upper limit for the current density is set within the above ranges.
In the alkaline water electrolysis according to the present embodiment, electrolysis operating pressure is preferably between 3 kPa and 4000 kPa, and more preferably between 3 kPa and 1000 kPa in gauge pressure from the viewpoint of cost.
The electrolysis operating pressure can be measured by the pressure gauge 78 installed in the alkaline water electrolysis apparatus, and may be an average of the pressure on the cathode side and the pressure on the anode side.
The flow rate of the electrolyte per electrode chamber and other conditions should be controlled as appropriate for each configuration of the bipolar zero-gap electrolyzer for water electrolysis.

(Hydrogen Production Method)

A preferable hydrogen production method according to the present embodiment is to use the above bipolar zero-gap electrolyzer for water electrolysis according to the present embodiment. The hydrogen production method according to the present embodiment is to produce hydrogen by water electrolysis of water containing alkali with a bipolar electrolyzer, and may be performed using the bipolar electrolyzer according to the present embodiment, the electrolysis apparatus according to the present embodiment, and the water electrolysis method according to the present embodiment.
Details of the electrolyzer according to the present embodiment, details of the electrolysis apparatus according to the present embodiment, and details of the water electrolysis method according to the present embodiment in the hydrogen production method according to the present embodiment are as described above.
The bipolar zero-gap electrolyzer for water electrolysis, alkaline water electrolysis apparatus, and alkaline water electrolysis method according to the present embodiment of the present disclosure has been described above with reference to the drawings. However, the bipolar zero-gap electrolyzer for water electrolysis, alkaline water electrolysis apparatus, and alkaline water electrolysis method according to the present disclosure as not limited to the examples described above, and the above embodiment may be modified as necessary.

EXAMPLES

The present disclosure is described in more detail below by way of examples, but the present disclosure is not limited in any way to the following examples.

(Elastic Modulus)

The elastic modulus of each electrode was determined using a tensile and compression testing machine (Autograph AG-Xplus manufactured by Shimadzu Corporation) as follows. An electrode of 2.5 cm × 8 cm in size was used as a sample. A displacement at 0.1 N was set to 0, and a 3-point bending test was performed on the electrode at a distance of 5 cm between the fulcrums, starting with a test force of 0.1 N. The slope of a strain-stress curve between 0.01% and 0.05% or between 0.1% and 0.5% was defined as the elastic modulus.

(Flexural Rigidity)

The flexural rigidity of each electrode was calculated as follows using the elastic modulus of the electrode obtained above.

$$[\text{Equation } 1]$$

$$E\,I = E \times I$$

where EI represents the flexural rigidity (kN·mm$^2$), E represents the elastic modulus (kN/mm$^2$), and I represents cross-sectional secondary moment (mm$^4$). The cross-sectional secondary moment was calculated as follows.

$$[\text{Equation } 2]$$

$$I = \frac{bh^3}{12}$$

where b represents the size (25 mm) of the electrode sample, and h represents the thickness (mm) of the electrode.

(Elastic Stress at 50% Compression Deformation)

The elastic stress of the conductive elastic body at 50% compression deformation was determined using a tensile and compression testing machine (Autograph AG-Xplus manufactured by Shimadzu Corporation) as follows. A conductive elastic body of 10 cm × 10 cm in size was used as a sample. A displacement at 10 N with the absence of the conductive elastic body was set to 0, and a compression test was performed on the conductive elastic body, starting with a test force of 10 N. A stress at a strain of 50% was defined as the elastic stress at 50% compression deformation.

(Contact Resistance of Current Collector)

The contact resistance of the current collector was measured using a tensile and compression testing machine (Autograph AG-Xplus manufactured by Shimadzu Corporation) and a resistance meter (HIOKI, RM3544-01) as follows. A current collector of 10 cm × 10 cm in size was used as a sample. Two copper plates (10 cm × 10 cm and 3 mm in thickness) were prepared. The current collector was placed between the two copper plates, and a compression test was performed at room temperature with a test force of 200 N. The product of the resistance (mΩ) of the current collector between the two copper plates during the test and a sample area (100 cm$^2$) was defined as the contact resistance (mΩcm$^2$) of the current collector.

[Example 1]

(Partition Wall)

As a partition wall in Example 1, a conductive partition wall in which hemispherical protrusions with a diameter of 20 mm and a height of 4 mm were arranged at intervals of 25 mm in 60° staggered arrangement on one surface of a nickel plate with a thickness of 3 mm, and hemispherical concavities were arranged at positions corresponding to the hemispherical protrusions on the opposite surface was used. The partition wall was disposed with the protrusions on the side of an anode chamber and the corresponding concavities on the side of a cathode chamber. The partition wall also functioned as outer frames. The partition wall is referred to as "Partition wall 1" below and in Table 1.

A membrane was provided between the anode chamber with an anode described below and the cathode chamber with a cathode described below of adjacent bipolar elements, to partition the anode chamber and the cathode chamber.

In the following examples and comparative examples, all the areas between the adjacent protrusions and between the adjacent concavities on the surfaces of the partition wall were flat portions.

(Anode)

As the anode in Example 1, a nickel expanded-type porous electrode (catalyst layer nickel) was used. The distance (LW) between centers of meshes in a long mesh opening direction was 4.5 mm, the distance (SW) between centers of the meshes in a short mesh opening direction was 3 mm, and the thickness of a base material was 1 mm. The anode is referred to as "Anode 1" below and in Table 1. The elastic modulus of Anode 1 was 12 GPa, and the flexural rigidity thereof was 32 kN·mm$^2$.

(Cathode)

As the cathode in Example 1, a plain weave mesh-type porous electrode (catalyst layer Pt/Pd) in which thin nickel wires with a diameter of 0.15 mm were woven in 40 meshes was used as a first cathode. The cathode is referred to as "Cathode 1" below and in Table 1. As a second cathode, a nickel foam (Cathode 1') with an average pore diameter of 0.5 mm and a thickness of 1 mm was used. Cathode 1 was placed close to the membrane and Cathode 1' was placed on an elastic body. The elastic modulus of Cathode 1' was 0.4 GPa, and the flexural rigidity thereof was 1 kN·mm$^2$.

(Elastic Body)

As the elastic body in Example 1, a conductive cushion mat with a thickness of 8 mm, which is made of 0.25 mm nickel wires woven and further processed into a corrugated shape, was used. The conductive cushion mat was disposed between the partition wall and the cathode in the cathode chamber, adjacent to the surface of the partition wall, and was compressed to 4 mm. The elastic body is referred to as "Elastic body 1" below and in Table 1. The elastic stress of Elastic body 1 at 50% compression deformation was 40 kPa.

In each bipolar element, there was conduction between the anode and the partition wall through the protrusions of the partition wall. In addition, there was conduction between the cathode adjacent to the elastic body and the partition wall through the elastic body adjacent to the partition wall.

The membrane is sandwiched between the cathode and the anode of the adjacent bipolar elements by elastic stress of the elastic body.

(Membrane)

As the membrane in Example 1, a commercially available porous membrane for water electrolysis ("Zirfon Perl UTP500" manufactured by Agfa) was used. This membrane is referred to as "Membrane 1" below and in Table 1.

[Example 2]

(Partition Wall)

Partition wall 1 was used as a partition wall in Example 2 and was disposed with the protrusions on the side of an anode chamber and the corresponding concavities on the side of a cathode chamber.

A membrane was provided between the anode chamber with an anode described below and the cathode chamber with a cathode described below, to partition the anode chamber and the cathode chamber.

(Anode)

As the anode in Example 2, a nickel punched-type porous electrode (catalyst layer nickel) with a pore diameter of 4 mm and a pitch between pores of 6 mm was used. The anode is referred to as "Anode 2" below and in Table 1. The elastic modulus of Anode 2 was 49 GPa, and the flexural rigidity thereof was 100 kN·mm$^2$.

(Cathode)

As the cathode in Example 2, Cathode 1 was used as a first cathode and Cathode 1' as a second cathode. Cathode 1 was placed close to the membrane and Cathode 1' was placed on an elastic body.

(Membrane)

As the membrane in Example 2, Membrane 1 was used.

(Elastic Body)

As the elastic body in Example 2, Elastic body 1 was used. Elastic body 1 was disposed between the partition wall and the cathode in the cathode chamber, adjacent to the surface of the partition wall, and was compressed to 4 mm.
In each bipolar element, there was conduction between the anode and the partition wall through the protrusions of the partition wall. In addition, there was conduction between the cathode adjacent to the elastic body and the partition wall through the elastic body adjacent to the partition wall.
The membrane is sandwiched between the cathode and the anode of the adjacent bipolar elements by elastic stress of the elastic body.

[Example 3]

(Partition Wall)

As a partition wall in Example 3, a conductive partition wall in which hemispherical protrusions with a diameter of 15 mm and a height of 3 mm were arranged at intervals of 40 mm in parallel on one surface of a nickel plate with a thickness of 3 mm, and hemispherical concavities were arranged at positions corresponding to the hemispherical protrusions on the opposite surface was used. The partition wall was disposed with the protrusions on the side of an anode chamber and the corresponding concavities on the side of a cathode chamber. The partition wall also functioned as outer frames. The partition wall is referred to as "Partition wall 2" below and in Table 1.
A membrane was provided between the anode chamber with an anode described below and the cathode chamber with a cathode described below, to partition the anode chamber and the cathode chamber.

(Anode)

As the anode in Example 3, a nickel foam porous electrode (catalyst layer nickel) with an average pore diameter of 0.9 mm and a base material thickness of 2 mm was used. The anode is referred to as "Anode 3" in Table 1. The elastic modulus of Anode 3 was 0.7 GPa, and the flexural rigidity thereof was 10 kN·mm$^2$.

(Cathode)

As the cathode in Example 3, Cathode 1 was used as a first cathode and Cathode 1' as a second cathode. Cathode 1 was placed close to the membrane and Cathode 1' was placed on an elastic body.

(Membrane)

As the membrane in Example 3, Membrane 1 was used.

(Elastic Body)

As the elastic body in Example 3, a conductive cushion mat with a thickness of 8 mm, which is made of 0.17 mm nickel wires woven and further processed into a corrugated shape, was folded back in use. The conductive cushion mat was disposed between the partition wall and the cathode in the cathode chamber, adjacent to the surface of the partition wall, and was compressed to 6 mm. The elastic body is referred to as "Elastic body 2" below and in Table 1. The elastic stress of Elastic body 2 at 50% compression deformation was 11 kPa.

In each bipolar element, there was conduction between the anode and the partition wall through the protrusions of the partition wall. In addition, there was conduction between the cathode adjacent to the elastic body and the partition wall through the elastic body adjacent to the partition wall.

The membrane is sandwiched between the cathode and the anode of the adjacent bipolar elements by elastic stress of the elastic body.

[Example 4]

(Partition Wall)

Partition wall 1 was used as a partition wall in Example 4 and was disposed with the protrusions on the side of an anode chamber and the corresponding concavities on the side of a cathode chamber.

A membrane was provided between the anode chamber with an anode described below and the cathode chamber with a cathode described below, to partition the anode chamber and the cathode chamber.

(Anode)

As the anode in Example 4, Anode 2 was used.

(Cathode)

As the cathode in Example 4, Cathode 1 was used as a first cathode and Cathode 1' as a second cathode. Cathode 1 was placed close to the membrane and Cathode 1' was placed on an elastic body.

(Membrane)

As the membrane in Example 4, Membrane 1 was used.

(Elastic Body)

As the elastic body in Example 4, Elastic body 2 was used. Elastic body 2 was disposed between the partition wall and the cathode in the cathode chamber, adjacent to the surface of the partition wall, and was compressed to 6 mm.

Furthermore, a conductive cushion mat with a thickness of 5 mm, which is made of 0.25 mm nickel wires woven and further processed into a corrugated shape, was used. The conductive cushion mat was disposed between the partition wall and the anode in the anode chamber, adjacent to the surface of the partition wall with the protrusions, and was compressed to 3 mm. The elastic body is referred to as "Elastic body 3" below and in Table 1. The elastic stress of Elastic body 3 at 50% compression deformation was 60 kPa.

In each bipolar element, there was conduction between the anode and the partition wall through the protrusions of the partition wall and the elastic body. In addition, there was conduction between the cathode adjacent to the elastic body and the partition wall through the elastic body adjacent to the partition wall.

The membrane is sandwiched between the cathode and the anode of the adjacent bipolar elements by elastic stress of the elastic body.

[Example 5]

(Partition wall)

As a partition wall in Example 5, a conductive partition wall in which hemispherical protrusions with a diameter of 10 mm and a height of 3 mm were arranged at intervals of 50 mm in 60° staggered arrangement on one surface of a nickel plate with a thickness of 3 mm; hemispherical protrusions with a diameter of 10 mm and a height of 3 mm were also arranged at intervals of 50 mm in 60° staggered arrangement on the other surface; and the protrusions on both surfaces were arranged such that a protrusion on the opposite surface was positioned at the center of gravity of an equilateral triangle consisting of three protrusions on one surface was used. In the partition wall, the protrusions and concavities were present on both surfaces, and each hemispherical concavity was present at a corresponding position to each hemispherical protrusion on an opposite side. The partition wall also functioned as outer frames. The partition wall is referred to as "Partition wall 3" below and in Table 1.

Partition wall 3 was disposed with the hemispherical protrusions with a diameter of 10 mm and a height of 3 mm on one surface on the side of an anode chamber and the hemispherical protrusions with a diameter of 10 mm and a height of 3 mm on the other surface on the side of a cathode chamber.

A membrane was provided between the anode chamber with an anode described below and the cathode chamber with a cathode described below, to partition the anode chamber and the cathode chamber.

(Anode)

As the anode in Example 5, Anode 1 was used.

(Cathode)

As the cathode in Example 5, Cathode 1 was used as a first cathode and Cathode 1' as a second cathode. Cathode 1 was placed close to the membrane and Cathode 1' was placed on an elastic body.

(Membrane)

As the membrane in Example 5, Membrane 1 was used.

(Elastic Body)

As the elastic body in Example 5, Elastic body 2 was used. Elastic body 2 was disposed between the partition wall and the cathode in the cathode chamber, adjacent to the surface of the partition wall, and was compressed to 6 mm. Furthermore, Elastic body 3 was disposed between the partition wall and the anode in the anode chamber, adjacent to the partition wall, and was compressed to 3 mm.

In each bipolar element, there was conduction between the anode and the partition wall through the protrusions of the partition wall and the elastic body. In addition, there was conduction between the cathode and the partition wall through the protrusions of the partition wall and the elastic body.

The membrane is sandwiched between the cathode and the anode of the adjacent bipolar elements by elastic stress of the elastic body.

[Example 6]

(Partition Wall)

Partition wall 1 was used as a partition wall in Example 6 and was disposed with the protrusions on the side of an anode chamber and the corresponding concavities on the side of a cathode chamber.

A membrane was provided between the anode chamber with an anode described below and the cathode chamber with a cathode described below, to partition the anode chamber and the cathode chamber.

(Anode)

As the anode in Example 6, a nickel expanded-type porous electrode (without catalyst layer) with an LW of 4.5 mm, an SW of 3 mm, and a thickness of 1.0 mm was used. The anode is referred to as "Anode 4" below and in Table 1. The elastic modulus of Anode 4 was 12 GPa, and the flexural rigidity thereof was 32 kN·mm$^2$.

(Cathode)

As the cathode in Example 6, a plain weave mesh-type porous electrode (without catalyst layer) in which thin nickel wires with a diameter of 0.15 mm were woven in 40 meshes was used as a first cathode. The cathode is referred to as "Cathode 2" below and in Table 1. As a second cathode, Cathode 1' was used. Cathode 2 was placed close to the membrane and Cathode 1' was placed on an elastic body.

(Membrane)

As the membrane in Example 6, Membrane 1 was used.

(Elastic Body)

As the elastic body in Example 6, Elastic body 1 was used. Elastic body 1 was disposed between the partition wall and the cathode in the cathode chamber, adjacent to the surface of the partition wall, and was compressed to 4 mm.

In each bipolar element, there was conduction between the anode and the partition wall through the protrusions of the partition wall. In addition, there was conduction between the cathode adjacent to the elastic body and the partition wall through the elastic body adjacent to the partition wall.

The membrane is sandwiched between the cathode and the anode of the adjacent bipolar elements by elastic stress of the elastic body.

[Example 7]

(Partition Wall)

As a partition wall in Example 7, a conductive partition wall in which hemispherical protrusions with a diameter of 20 mm and a height of 4 mm were arranged at intervals of 25 mm in 60° staggered arrangement on one surface of a nickel plate with a thickness of 3 mm, and the other surface was flat without protrusions and concavities, was used. The partition wall was disposed with the protrusions on the side of an anode chamber and no protrusions and concavities on the side of a cathode chamber. The partition wall also functioned as outer frames. The partition wall is referred to as "Partition wall 4" below and in Table 1.

A membrane was provided between the anode chamber with an anode described below and the cathode chamber with a cathode described below of adjacent bipolar elements, to partition the anode chamber and the cathode chamber.

(Anode)

As the anode in Example 7, Anode 1 was used.

(Cathode)

As the cathode in Example 7, Cathode 1 was used as a first cathode and Cathode 1' as a second cathode. Cathode 1 was placed close to the membrane and Cathode 1' was placed on an elastic body.

(Membrane)

As the membrane in Example 7, Membrane 1 was used.

(Elastic Body)

As the elastic body in Example 7, Elastic body 1 was used. Elastic body 1 was disposed between the partition wall and the cathode in the cathode chamber, adjacent to the surface of the partition wall, and was compressed to 4 mm.

In each bipolar element, there was conduction between the anode and the partition wall through the protrusions of the partition wall. In addition, there was conduction between the cathode adjacent to the elastic body and the partition wall through the elastic body adjacent to the partition wall.

The membrane is sandwiched between the cathode and the anode of the adjacent bipolar elements by elastic stress of the elastic body.

[Example 8]

(Partition Wall)

As a partition wall in Example 8, a conductive partition wall in which hemispherical protrusions with a diameter of 20 mm and a height of 4 mm were arranged at intervals of 25 mm in 60° staggered arrangement on one surface of a plate having a nickel plating layer on surfaces of SPCC with a thickness of 3 mm, and hemispherical concavities were arranged at positions corresponding to the hemispherical protrusions on the opposite surface was used. The partition wall was disposed with the protrusions on the side of an anode chamber and the concavities on the side of a cathode chamber. The partition wall also functioned as outer frames. The partition wall is referred to as "Partition wall 5" below and in Table 1.

A membrane was provided between the anode chamber with an anode described below and the cathode chamber with a cathode described below, to partition the anode chamber and the cathode chamber.

(Anode)

As the anode in Example 8, Anode 1 was used.

(Cathode)

As the cathode in Example 8, Cathode 1 was used as a first cathode and Cathode 1' as a second cathode. Cathode 1 was placed close to the membrane and Cathode 1' was placed on an elastic body.

(Membrane)

As the membrane in Example 8, Membrane 1 was used.

(Elastic Body)

As the elastic body in Example 8, Elastic body 1 was used. Elastic body 1 was disposed between the partition wall and the cathode in the cathode chamber, adjacent to the surface of the partition wall, and was compressed to 4 mm.
In each bipolar element, there was conduction between the anode and the partition wall through the protrusions of the partition wall. In addition, there was conduction between the cathode adjacent to the elastic body and the partition wall through the elastic body adjacent to the partition wall.
The membrane is sandwiched between the cathode and the anode of the adjacent bipolar elements by elastic stress of the elastic body.

[Example 9]

(Partition Wall)

Partition wall 1 was used as a partition wall in Example 9 and was disposed with the protrusions on the side of an anode chamber and the corresponding concavities on the side of a cathode chamber.
A membrane was provided between the anode chamber with an anode described below and the cathode chamber with a cathode described below, to partition the anode chamber and the cathode chamber.

(Anode)

As the anode in Example 9, Anode 1 was used.

(Cathode)

As the cathode in Example 9, Cathode 1 was used. A second cathode was not used.

(Membrane)

As the membrane in Example 9, Membrane 1 was used.

(Elastic Body, Current Collector)

As a current collector in Example 9, nickel expanded metal with an LW of 4.5 mm, an SW of 3 mm, and a thickness of 1.0 mm was used. The current collector is hereinafter referred to as "Current collector 1". The contact resistance of the Current collector 1 was 20 $m\Omega cm^2$, the elastic modulus thereof was 12 GPa, and the flexural rigidity thereof was 32 $kN \cdot mm^2$. As an elastic body, Elastic body 1 was used.
Current collector 1 was placed in contact with the surface of the partition wall of the cathode chamber. Furthermore, Elastic body 1 was placed in contact with Current collector 1 and compressed to 4 mm.
In each bipolar element, there was conduction between the anode and the partition wall through the protrusions of the partition wall. In addition, there was conduction between the cathode adjacent to the elastic body and the partition wall through the elastic body adjacent to the partition wall.

The membrane is sandwiched between the cathode and the anode of the adjacent bipolar elements by elastic stress of the elastic body.

[Example 10]

(Partition Wall)

As a partition wall in Example 10, a conductive partition wall in which hemispherical protrusions with a diameter of 50 mm and a height of 9 mm were arranged at intervals of 70 mm in 60° staggered arrangement on one surface of a nickel plate with a thickness of 3 mm, and hemispherical concavities were arranged at positions corresponding to the hemispherical protrusions on the opposite surface was used. The partition wall was disposed with the protrusions on the side of an anode chamber and the corresponding concavities on the side of a cathode chamber. The partition wall also functioned as outer frames. The partition wall is referred to as "Partition wall 6" below and in Table 1.

A membrane was provided between the anode chamber with an anode described below and the cathode chamber with a cathode described below, to partition the anode chamber and the cathode chamber.

(Anode)

As the anode of Example 10, Anode 1 was used.

(Cathode)

As the cathode of Example 10, Cathode 1 was used as a first cathode, and a nickel foam (Cathode 2') with an average pore diameter of 0.9 mm and a base material thickness of 2 mm was used. Cathode 1 was placed close to the membrane and Cathode 2' was placed on an elastic body. The elastic modulus of Cathode 2' was 0.7 GPa, and the flexural rigidity thereof was 10 kN·mm$^2$.

(Membrane)

As the membrane in Example 10, Membrane 1 was used.

(Elastic Body, Current Collector)

As a current collector in Example 10, Current collector 1 was used. Current collector 1 was placed in contact with the surface of the partition wall of the cathode chamber. Furthermore, an elastic body was placed in contact with Current collector 1. As the elastic body, a conductive cushion mat with a thickness of 8 mm, which is made of 0.25 mm nickel wires woven and further processed into a corrugated shape, was folded back in use and compressed to 10 mm. The elastic body is referred to as "Elastic body 4" below and in Table 1. The elastic stress of Elastic body 4 at 50% compression deformation was 40 kPa.

In each bipolar element, there was conduction between the anode and the partition wall through the protrusions of the partition wall. In addition, there was conduction between the cathode adjacent to the elastic body and the partition wall through the elastic body adjacent to the partition wall.

The membrane is sandwiched between the cathode and the anode of the adjacent bipolar elements by elastic stress of the elastic body.

[Example 11]

(Partition Wall)

As a partition wall in Example 11, a conductive partition wall in which hemispherical protrusions with a diameter of 55 mm and a height of 12 mm were arranged at intervals of 105 mm in 60° staggered arrangement on one surface of a nickel plate with a thickness of 3 mm, and hemispherical concavities were arranged at positions corresponding to the hemispherical protrusions on the opposite surface was used. The partition wall was disposed with the protrusions on the side of an anode chamber and the corresponding concavities on the side of a cathode chamber. The partition wall also functioned as outer frames. The partition wall is referred to as "Partition wall 7" below and in Table 1.

A membrane was provided between the anode chamber with an anode described below and the cathode chamber with a cathode described below, to partition the anode chamber and the cathode chamber.

(Anode)

As the anode of Example 11, Anode 1 was used.

(Cathode)

As the cathode of Example 11, Cathode 1 was used as a first cathode, and a nickel foam (Cathode 2') with an average pore diameter of 0.9 mm and a base material thickness of 2 mm was used. Cathode 1 was placed close to the membrane and Cathode 2' was placed on an elastic body. The elastic modulus of Cathode 2' was 0.7 GPa, and the flexural rigidity thereof was 10 kN·mm$^2$.

(Membrane)

As the membrane in Example 11, Membrane 1 was used.

(Elastic Body, Current Collector)

As a current collector in Example 11, Current collector 1 was used. Current collector 1 was placed in contact with the surface of the partition wall of the cathode chamber. Furthermore, an elastic body was placed in contact with Current collector 1. As the elastic body, a conductive cushion mat with a thickness of 8 mm, which is made of 0.25 mm nickel wires woven and further processed into a corrugated shape, was folded back in use and compressed to 10 mm. The elastic body is referred to as "Elastic body 4" below and in Table 1. The elastic stress of Elastic body 4 at 50% compression deformation was 40 kPa.

In each bipolar element, there was conduction between the anode and the partition wall through the protrusions of the partition wall. In addition, there was conduction between the cathode adjacent to the elastic body and the partition wall through the elastic body adjacent to the partition wall.

The membrane is sandwiched between the cathode and the anode of the adjacent bipolar elements by elastic stress of the elastic body.

[Comparative Example 1]

(Partition Wall)

Partition wall 1 was used as a partition wall in Comparative Example 1 and was disposed with the protrusions on the side of an anode chamber and the corresponding concavities on the side of a cathode chamber.

(Anode)

As an anode in Comparative Example 1, Anode 4 was used.

(Cathode)

As a cathode in Comparative Example 1, Cathode 2 was used as a first cathode and Cathode 1' as a second cathode. Cathode 2 was placed close to a membrane and Cathode 1' was placed far from the membrane.

(Membrane)

As the membrane in Comparative Example 1, Membrane 1 was used.

(Elastic Body)

In Comparative Example 1, no elastic body was used.

In each bipolar element, there was conduction between the anode and the partition wall through the protrusions of the partition wall. In addition, the partition wall was adjacent to the cathode, and there was conduction between the cathode and the partition wall.

[Comparison Example 2]

(Partition Wall)

As a partition wall in Comparative Example 2, Partition wall 3 was used (there are protrusions and concavities corresponding to the protrusions on both sides of an anode chamber and an anode chamber).

(Anode)

As an anode in Comparative Example 2, Anode 4 was used.

(Cathode)

As a cathode in Comparative Example 2, Cathode 2 was used as a first cathode and Cathode 1' as a second cathode. Cathode 2 was placed close to a membrane and Cathode 1' was placed far from the membrane.

(Membrane)

As the membrane in Comparative Example 2, Membrane 1 was used.

(Elastic Body)

In Comparative Example 2, no elastic body was used.
In each bipolar element, there was conduction between the anode and the partition wall through the protrusions of the partition wall. In addition, there was conduction between the cathode and the partition wall through the protrusions of the partition wall.

[Comparative Example 3]

(Partition Wall)

As a partition wall in Comparative Example 3, a nickel flat plate having a thickness of 3 mm with no protrusions and no concavities was used. The partition wall also functioned as outer frames. The partition wall is referred to as "Partition wall 8" below and in Table 1.

(Anode)

As an anode in Comparative Example 3, Anode 4 was used.

(Cathode)

As a cathode in Comparative Example 3, Cathode 2 was used as a first cathode and Cathode 1' as a second cathode. Cathode 2 was placed close to a membrane and Cathode 1' was placed far from the membrane.

(Membrane)

As the membrane in Comparative Example 3, Membrane 1 was used.

(Elastic Body)

In Comparative Example 3, no elastic body was used.
In each bipolar element, the partition wall and the anode were adjacent to each other, and there was conduction between the anode and the partition wall. In addition, the partition wall and the anode were adjacent to each other, and there was conduction between the anode and the partition wall.
A used bipolar electrolyzer and electrolysis system will be described below. The same conditions were used in all Examples and Comparative Examples, except for the partition walls, electrode membranes, and elastic bodies described above.

[Bipolar Electrolyzer]

Electrolyzers with a bipolar zero-gap structure, as illustrated in FIG. 1, each of which was constituted of an anode terminal element, a cathode terminal element, and four bipolar elements were manufactured. The electrolyzers each incorporate the anodes, cathodes, and membranes of respective Examples and Comparative Examples in the same manner. Components other than the anodes, cathodes, and membranes were those commonly used in the art.
The stack pressure of each electrolyzer was 0.8 MPa, and the surface pressure between the gasket and the membrane and between the gasket and the outer frame was 2.5 MPa.

<Bipolar Element>

The bipolar element was rectangular of 1200 mm × 200 mm, and the areas of the anode and cathode were 1150 mm × 180 mm. This zero-gap bipolar elements were stacked through the membranes of 1150 mm × 180 mm, to form a zero-gap structure with the cathodes and anodes pressed against the membranes.

[Electrolysis System]

The bipolar electrolyzer described above was incorporated in an electrolysis apparatus 70 illustrated in FIG. 2 and used for alkaline water electrolysis. An outline of an electrolysis system will be described below with reference to FIG. 2.
Gas-liquid separation tanks 72 and a bipolar electrolyzer 50 are filled with 30% KOH solution as an electrolyte. The electrolyte is circulated by a tubing pump 71 between the anode chamber and a gas-liquid separation tank for the anode (oxygen separation tank 72o) and between the cathode chamber and a gas-liquid separation tank for the cathode (hydrogen separation tank 72h). The flow rate of the electrolyte was adjusted so that a linear velocity in the electrolyzer was 3 mm/s on average, as measured by a flow meter 77. Temperature was adjusted by a heat exchanger 79 so that the temperature at an outlet side of the electrolyzer was 90°C.
A rectifier 74 energized the cathode and anode of each electrolytic cell at a specified electrode density.
Pressure within the cell after the start of energizing was measured with a pressure gauge 78, and adjusted so that cathode side pressure was 500 kPa and oxygen side pressure was 499 kPa. The pressure was adjusted by installing a pressure control valve 80 downstream of the pressure gauge 78.
The rectifier 74, oxygen concentration meter 75, hydrogen concentration meter 76, flow meter 77, pressure gauge 78, heat exchanger 79, tubing pump 71, gas-liquid separation tanks 72 (72h and 72o), water replenisher 73, and the like are all commonly used in the art.

[Electrolysis Test]

Alkaline water electrolysis was performed with the electrolyzers of Examples 1 to 11 and Comparative Examples 1 to 3 by 24 hours continuously energization under current densities of 1, 6, and 10 kA/m$^2$.
After 24 hours, for each of Examples and Comparative Examples, the average of the counter voltage of the four electrolytic cells was calculated and evaluated as cell voltage (V), and the results are listed in Table 1.
In any of Examples 1 to 11 and Comparative Examples 1 to 3, there was no electrolyte leakage after the electrolysis test.

[Fluctuation Test]

With the electrolyzers of Examples 1 to 11 and Comparative Examples 1 to 3, fluctuations in which the current density was increased from 1 to 10 kA/m$^2$ in about 3 seconds and then the current density was decreased from 10 to 1 kA/m$^2$ in about 3 seconds were repeated 10000 times. The current density was then set to 10 kA/m$^2$, and after 24 hours, for each of Examples and Comparative Examples, the average of the counter voltage of the four electrolytic cells was calculated and evaluated as cell voltage (V), and the results are listed in Table 1.
The cell voltage at 10 kA/m$^2$ after the fluctuation test and the cell voltage at 10 kA/m$^2$ in the above electrolysis test was calculated as $\Delta$V (V). The results are listed in Table 1.
In any of Examples 1 to 11 and Comparative Examples 1 to 3, there was no electrolyte leakage after the fluctuation test.

[Temperature Difference in Tank]

In the electrolysis test, the temperature difference $\Delta$T in the tank during 24 hours continuous energization at a current density of 10 kA/m$^2$ was calculated by measuring a temperature (T1) at an inlet side of the tank and a temperature (T2) at an outlet side.

$$\Delta T \ (°C) = T2 - T1$$

[Check of Damage to Members after Fluctuation Test]

After the fluctuation test, the electrolyzer was disassembled, and the conditions of damage to the membranes, electrolysis frames, and electrodes were visually observed.
The following criteria were then used to evaluate the results.

Good (Circle): No damage
Fair (Triangle): Minor damage
Poor (Cross): Severe damage

In the electrolyzers of Examples 1 to 5, the cell voltage was low in a range of 1 to 10 kA/m$^2$, indicating that hydrogen can be efficiently produced over the wide range of current densities. In addition, an increase in temperature in the tank was small, and furthermore, an increase in the cell voltage after the fluctuation test was small, and no damage to the components was observed, indicating that it is possible to accommodate fluctuating power supplies.
Example 6 indicates that this effect can be obtained even without a catalyst.
Example 7 presents a low cell voltage in the range of 1 to 10 kA/m$^2$, indicating that hydrogen can be efficiently produced over the wide range of current densities. On the other hand, after the fluctuation test, a slight increase in cell voltage was observed and some minor damage to the components was observed, but there were no problems with operation, indicating that it is possible to accommodate fluctuating power supplies.
Example 8 presents a low cell voltage in the range of 1 to 10 kA/m$^2$, even when the conductive partition wall has the nickel plating layer, indicating that hydrogen can be efficiently produced over the wide range of current densities. In addition, an increase in temperature in the tank was small, and furthermore, an increase in the cell voltage after the fluctuation test was small, and no damage to the components including the nickel plating layer was observed, indicating that it is possible to accommodate fluctuating power supplies.
Examples 9 and 10 present low cell voltages in the range of 1 to 10 kA/m$^2$, even when the current collectors were provided, indicating that hydrogen can be efficiently produced over the wide range of current densities. In addition, increases in temperature in the tanks were small, and although slight increases in cell voltage were observed after the fluctuation test, little damage to the components was observed, indicating that even with the current collectors, it is possible to accommodate fluctuating power supplies.
In Example 11, although the cell voltage was somewhat higher in the range of 1 to 10 kA/m$^2$, it was indicated that hydrogen could be produced efficiently over the wide range of current densities. This is because the wider distance between the protrusions and the high deflection of the electrodes cause reduction in uniformity of the zero-gap structure. An increase in temperature in the tank was small, and although a slight increase in cell voltage was observed after the fluctuation test, little damage to the components was observed, indicating that it is possible to accommodate fluctuating power supplies.
In Comparative Examples 1 to 3, high cell voltages were observed in the range of 1 to 10 kA/m$^2$ and increases in temperature in the chamber were also large. Furthermore, increases in cell voltage after the fluctuation test were large, and damage to the components was observed, indicating that hydrogen cannot be efficiently produced over the wide current density range and that it is difficult to accommodate fluctuating power supplies.

Table 1

| | | | Examples | | | | | | | | | | | Comparative Examples | | |
|---|---|---|---|---|---|---|---|---|---|---|---|---|---|---|---|---|---|
| | | | 1 | 2 | 3 | 4 | 5 | 6 | 7 | 8 | 9 | 10 | 11 | 1 | 2 | 3 |
| Partition wall | | Type | Partition wall 1 | Partition wall 1 | Partition wall 2 | Partition wall 1 | Partition wall 3 | Partition wall 1 | Partition wall 4 | Partition wall 5 | Partition wall 1 | Partition wall 6 | Partition wall 7 | Partition wall 1 | Partition wall 3 | Partition wall 8 |
| | | Height of protrusions (mm) | 4 | 4 | 3 | 4 | Both surfaces 3 | 4 | 4 | 4 | 4 | 9 | 12 | 4 | Both surfaces 3 | - |
| Anode chamber | | Anode | Anode 1 | Anode 2 | Anode 3 | Anode 2 | Anode 1 | Anode 4 | Anode 1 | Anode 1 | Anode 1 | Anode 1 | Anode 1 | Anode 4 | Anode 4 | Anode 4 |
| | | Shape* | EM | PM | MF | PM | EM | EM | EM | EM | EM | EM | EM | EM | EM | EM |
| | | Elastic modulus (Gpa) | 12 | 49 | 0.7 | 49 | 12 | 12 | 12 | 12 | 12 | 12 | 12 | 12 | 12 | 12 |
| | | Flexural rigidity (kN·mm$^2$) | 32 | 100 | 10 | 100 | 32 | 32 | 32 | 32 | 32 | 32 | 32 | 32 | 32 | 32 |
| | | LW (mm) | 4.5 | - | - | - | 4.5 | 4.5 | 4.5 | 4.5 | 4.5 | 4.5 | 4.5 | 4.5 | 4.5 | 4.5 |
| | | SW (mm) | 3 | - | - | - | 3 | 3 | 3 | 3 | 3 | 3 | 3 | 3 | 3 | 3 |
| | | Thickness (mm) | 1 | 1 | 2 | 1 | 1 | 1 | 1 | 1 | 1 | 1 | 1 | 1 | 1 | 1 |
| | | D (mm) | - | 4 | - | 4 | - | - | - | - | - | - | - | - | - | - |
| | | P (mm) | - | 6 | - | 6 | - | - | - | - | - | - | - | - | - | - |
| | | Average pore diameter (mm) | - | - | 0.9 | - | - | - | - | - | - | - | - | - | - | - |
| | | Elastic body | - | - | - | Elastic body 3 | Elastic body 3 | - | - | - | - | - | - | - | - | - |

| Bipolar ze-ro-gap electrolyz-er | | | Examples | | | | | | | | | | | Comparative Examples | | |
|---|---|---|---|---|---|---|---|---|---|---|---|---|---|---|---|---|
| | | | 1 | 2 | 3 | 4 | 5 | 6 | 7 | 8 | 9 | 10 | 11 | 1 | 2 | 3 |
| Bipolar ze-ro-gap electrolyz-er | | Thickness during compres-sion (mm) | - | - | - | 3 | 3 | - | - | - | - | - | - | - | - | - |
| | Cathode chamber | First cath-ode | Cathode 1 | Cathode 1 | Cathode 1 | Cathode 1 | Cathode 1 | Cathode 2 | Cathode 1 | Cathode 1 | Cathode 1 | Cathode 1 | Cathode 1 | Cathode 2 | Cathode 2 | Cathode 2 |
| | | Shape* | PW | PW | PW | PW | PW | PW | PW | PW | PW | PW | PW | PW | PW | PW |
| | | Thickness of first cathode (mm) | 0.3 | 0.3 | 0.3 | 0.3 | 0.3 | 0.3 | 0.3 | 0.3 | 0.3 | 0.3 | 0.3 | 0.3 | 0.3 | 0.3 |
| | | Second cathode (disposed on elastic bodv) | Cathode 1' | Cathode 1' | Cathode 1' | Cathode 1' | Cathode 1' | Cathode 1' | Cathode 1' | Cathode 1' | - | Cathode 2' | Cathode 2' | Cathode 1' | Cathode 1' | Cathode 1' |
| | | Shape* | MF | MF | MF | MF | MF | MF | MF | MF | - | MF | MF | MF | MF | MF |
| | | Thickness of second cathode (mm) | 1 | 1 | 1 | 1 | 1 | 1 | 1 | 1 | - | 2 | 2 | 1 | 1 | 1 |
| | | Elastic modulus (Gpa) | 0.4 | 0.4 | 0.4 | 0.4 | 0.4 | 0.4 | 0.4 | 0.4 | - | 0.7 | 0.7 | 0.4 | 0.4 | 0.4 |
| | | Flexural ri-gidity (kN·mm$^2$) | 1 | 1 | 1 | 1 | 1 | 1 | 1 | 1 | - | 10 | 10 | 1 | 1 | 1 |
| | | Elastic body | Elastic body 1 | Elastic body 1 | Elastic body 2 | Elastic body 2 | Elastic body 2 | Elastic body 1 | Elastic body 1 | Elastic body 1 | Elastic body 1 | Elastic body 4 | Elastic body 4 | - | - | - |

34

| | | | Examples | | | | | | | | | | | | Com parative Examples | | |
|---|---|---|---|---|---|---|---|---|---|---|---|---|---|---|---|---|---|
| | | | 1 | 2 | 3 | 4 | 5 | 6 | 7 | 8 | 9 | 10 | 11 | 1 | 2 | 3 |
| | | Wire diameter (mm) | 0.25 | 0.25 | 0.17 | 0.17 | 0.17 | 0.25 | 0.25 | 0.25 | 0.25 | 0.25 | 0.25 | - | - | - |
| | | Thickness during compression (mm) | 4 | 4 | 6 | 6 | 6 | 4 | 4 | 4 | 4 | 10 | 10 | - | - | - |
| | | Elastic stress (kPa) | 40 | 40 | 11 | 11 | 11 | 40 | 40 | 40 | 40 | 40 | 40 | - | - | - |
| | Membrane | Type | Membrane 1 | Membrane 1 | Membrane 1 | Membrane 1 | Membrane 1 | Membrane 1 | Membrane 1 | Membrane 1 | Membrane 1 | Membrane 1 | Membrane 1 | Membrane 1 | Membrane 1 | Membrane 1 |
| Performance | Electrolysis test Cell voltage [V] | 1 kA/m$^2$ | 1.52 | 1.53 | 1.51 | 1.52 | 1.51 | 1.81 | 1.51 | 1.52 | 1.51 | 1.52 | 1.53 | 1.90 | 1.82 | 2.10 |
| | | 6 kA/m$^2$ | 1.81 | 1.82 | 1.83 | 1.83 | 1.82 | 2.11 | 1.83 | 1.83 | 1.80 | 1.89 | 1.95 | 2.20 | 2.12 | 2.31 |
| | | 10 kA/m$^2$ | 1.92 | 1.91 | 1.92 | 1.93 | 1.92 | 2.22 | 2.01 | 1.96 | 1.91 | 203 | 2.13 | 2.40 | 2.23 | 2.65 |
| | Fluctuation test Cell voltage [V] | 1 ←→ 10 kA/m$^2$ | 1.92 | 1.92 | 1.91 | 1.92 | 1.92 | 2.23 | 2.06 | 1.97 | 1.94 | 206 | 2.17 | 2.52 | 2.36 | 2.75 |
| | | ΔV | 0.00 | 0.01 | -0.01 | -0.01 | 0.00 | 0.01 | 0.05 | 0.01 | 0.03 | 0.03 | 0.04 | 0.12 | 0.13 | 0.1 |
| | Temperature difference in tank DT[°C] @10 kA/m$^2$ | | 13 | 14 | 12 | 12 | 9 | 14 | 15 | 14 | 13 | 7 | 7 | 76 | 24 | 76 |
| | Damage to components after fluctuation test | | ○ | ○ | ○ | ○ | ○ | ○ | △ | ○ | ○ | ○ | ○ | × | × | × |

Shape*: EM: expanded-type, PM: punched-type, PW: plain weave mesh-type, MF: metal foam

EP 4 166 693 A1

INDUSTRIAL APPLICABILITY

According to the bipolar zero-gap electrolyzer for water electrolysis according to the present embodiment, hydrogen can be efficiently produced over a wide range of current densities and can accommodate fluctuating power supplies. For example, the bipolar zero-gap electrolyzer for water electrolysis according to the present embodiment can be used as an electrolyzer for alkaline water electrolysis.

REFERENCE SIGNS LIST

| | |
|---|---|
| 1 | conductive partition wall |
| 11 | protrusion |
| 12 | concavity |
| 13 | flat portion |
| 2 | electrode |
| 2a | anode |
| 2c | first cathode |
| 2e | elastic body |
| 2r | second cathode |
| 2x | current collector |
| 3 | outer frame |
| 4 | membrane |
| 5a | anode chamber |
| 5b | cathode chamber |
| 7 | gasket |
| 50 | bipolar electrolyzer |
| 51g | fast head, loose head |
| 51i | insulating plate |
| 51a | anode terminal element |
| 51c | cathode terminal element |
| 51r | tie rod |
| 60 | bipolar element |
| 65 | electrolytic cell |
| 70 | electrolysis apparatus |
| 71 | tubing pump |
| 72 | gas-liquid separation tank |
| 72h | hydrogen separation tank |
| 72o | oxygen separation tank |
| 73 | water replenisher |
| 74 | rectifier |
| 75 | oxygen concentration meter |
| 76 | hydrogen concentration meter |
| 77 | flow meter |
| 78 | pressure gauge |
| 79 | heat exchanger |
| 80 | pressure control valve |
| SW | distance between centers of meshes in short mesh opening direction |
| LW | distance between centers of meshes in long mesh opening direction |
| C | mesh opening |
| TE | mesh thickness |
| B | mesh bond length |
| T | plate thickness |
| W | feed width (pitch width) |
| A | mesh opening of plain weave mesh-type |
| d | wire diameter of plain weave mesh-type |
| D | pore diameter of punched-type |
| P | pitch between pores of punched-type |

**Claims**

1.  A bipolar zero-gap electrolyzer for water electrolysis comprising a plurality of bipolar elements stacked so as to sandwich a gasket and a membrane, each of the bipolar elements comprising an anode chamber with an anode, a cathode chamber with a cathode, a conductive partition wall provided between the anode chamber and the cathode chamber, and an outer frame framing the conductive partition wall, surface pressure being applied between the gasket and the partition wall and between the gasket and the outer frame to achieve sealing of an electrolyte,

    wherein
    the conductive partition wall has protrusions on at least one surface,
    a conductive elastic body is disposed between a surface of the conductive partition wall opposite the one surface and one of the electrodes,
    one and the other of the electrodes form conduction with the conductive partition wall at least through the protrusions and at least through the conductive elastic body, respectively, and
    the membrane is sandwiched between the cathode and the anode of the adjacent bipolar elements by elastic stress of the conductive elastic body.

2.  The bipolar zero-gap electrolyzer for water electrolysis according to claim 1, wherein the protrusions are on at least the one surface of the conductive partition wall, and concavities corresponding to the protrusions are on the surface opposite the one surface.

3.  The bipolar zero-gap electrolyzer for water electrolysis according to claim 1 or 2, wherein

    the conductive partition wall has the protrusions, concavities, and flat portions on surfaces,
    the protrusions are disposed only on the one surface, and the flat portions are each disposed between at least a pair of the protrusions adjacent to each other, and
    the concavities are disposed only on the surface opposite the one surface, and the flat portions are each disposed between at least a pair of the concavities adjacent to each other.

4.  The bipolar zero-gap electrolyzer for water electrolysis according to any one of claims 1 to 3, wherein a conductive elastic body is disposed between the one surface of the conductive partition wall and one of the electrodes provided in one of the electrode chambers on a side of the one surface.

5.  The bipolar zero-gap electrolyzer for water electrolysis according to claim 1 or 2, wherein the conductive partition wall has the protrusions on both surfaces, and the conductive elastic bodies are disposed adjacent to each of the both surfaces of the conductive partition wall.

6.  The bipolar zero-gap electrolyzer for water electrolysis according to any one of claims 1 to 5, wherein the conductive elastic body is at least in the cathode chamber.

7.  The bipolar zero-gap electrolyzer for water electrolysis according to any one of claims 1 to 6, wherein an interval between the protrusions is 10 mm or more and 100 mm or less.

8.  The bipolar zero-gap electrolyzer for water electrolysis according to any one of claims 1 to 7, wherein

    an interval between the protrusions is 10 mm or more and 100 mm or less,
    a diameter of each of the protrusions is 1 mm or more and 70 mm or less, and
    a height of each of the protrusions is 0.1 mm or more and 20 mm or less.

9.  The bipolar zero-gap electrolyzer for water electrolysis according to any one of claims 1 to 8, wherein the membrane is a porous membrane.

10. The bipolar zero-gap electrolyzer for water electrolysis according to any one of claims 1 to 9, wherein

    a current collector is disposed between the conductive elastic body and the conductive partition wall, and
    a contact resistance of the current collector is 1 m$\Omega$cm$^2$ or more and 150 m$\Omega$cm$^2$ or less.

11. The bipolar zero-gap electrolyzer for water electrolysis according to any one of claims 1 to 10, wherein an elastic modulus of the anode is 0.01 GPa or more and 200 GPa or less.

12. The bipolar zero-gap electrolyzer for water electrolysis according to any one of claims 1 to 11, wherein an elastic modulus of the cathode is 0.01 GPa or more and 200 GPa or less.

13. The bipolar zero-gap electrolyzer for water electrolysis according to any one of claims 1 to 12, wherein

the conductive elastic body is a conductive cushion mat, and
the conductive cushion mat has a wire diameter of 0.05 mm or more and 1 mm or less, a thickness during compression of 1 mm or more and 20 mm or less, and an elastic stress at 50% compression deformation of 1 kPa or more and 1000 kPa or less.

14. The bipolar zero-gap electrolyzer for water electrolysis according to any one of claims 1 to 13, wherein the conductive partition wall has a nickel plating layer.

15. The bipolar zero-gap electrolyzer for water electrolysis according to any one of claims 1 to 14, wherein

the anode and/or the cathode are/is made of nickel in material, and at least one porous body selected from a group consisting of metal foams, plain weave mesh-type porous bodies, punched-type porous bodies, or expanded-type porous bodies, and
the porous body is disposed on the conductive elastic body.

16. The bipolar zero-gap electrolyzer for water electrolysis according to any one of claims 1 to 15, wherein stack pressure is 0.5 MPa or more and 100 MPa or less.

17. A hydrogen production method comprising using the bipolar zero-gap electrolyzer for water electrolysis according to any one of claims 1 to 16.

18. The hydrogen production method according to claim 17, wherein electrolysis operating pressure is 3 to 4000 kPa.

# FIG. 1

# FIG. 2

FIG. 3A

FIG. 3B

FIG. 3C

# FIG. 4A

PLAN VIEW

PATTERN EXAMPLE a

11

INTERVAL

DIAMETER

PATTERN EXAMPLE b

INTERVAL

DIAMETER

# FIG. 4B

CROSS-SECTIONAL VIEW

INTERVAL

HEIGHT

DIAMETER

FIG. 5

A

LW

2W

W

SW

C

T

B

A

W

T

TE

CROSS-SECTIONAL VIEW ALONG A-A

FIG. 6

FIG. 7

# FIG. 8

PORE DIAMETER

## INTERNATIONAL SEARCH REPORT

| | International application No. |
| --- | --- |
| | PCT/JP2021/022740 |

### A. CLASSIFICATION OF SUBJECT MATTER

C25B 13/02(2006.01)i; C25B 1/04(2021.01)i; C25B 9/00(2021.01)i; C25B 9/23(2021.01)i
FI: C25B13/02 302; C25B1/04; C25B9/23; C25B9/00 A

According to International Patent Classification (IPC) or to both national classification and IPC

### B. FIELDS SEARCHED

Minimum documentation searched (classification system followed by classification symbols)
C25B13/02; C25B1/04; C25B9/00; C25B9/23

| Documentation searched other than minimum documentation to the extent that such documents are included in the fields searched | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | WO 2019/111832 A1 (TOKUYAMA CORPORATION) 13 June 2019 (2019-06-13) paragraphs [0004], [0005], [0025], [0026], [0032], [0041]-[0068], fig. 1, 5-13 | 1, 4-6, 9-18<br>1-2, 4-18<br>3 |
| Y<br>A | JP 6-049675 A (TOSOH CORP.) 22 February 1994 (1994-02-22) claims, paragraphs [0023]-[0053], fig. 4, 8 | 1-2, 4-18<br>3 |
| Y<br>A | JP 3-249189 A (CHLORINE ENGINEERS CO., LTD.) 07 November 1991 (1991-11-07) claims, page 2, lower right column, line 10 to page 4, upper left column, line 10, fig. 1-4 | 1-2, 4-18<br>3 |

☒ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12 August 2021 (12.08.2021) | 24 August 2021 (24.08.2021) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**INTERNATIONAL SEARCH REPORT**

| International application No. |
|---|
| PCT/JP2021/022740 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 62-502125 A (ORONZIO DE NORA IMPIANTI ELETTROCHIMICI S.P.A.) 20 August 1987 (1987-08-20) claims, page 4, upper left column, lines 14-16, upper right column, line 9 to lower left column, line 6, fig. 1 | 1-2, 4-18<br>3 |

Form PCT/ISA/210 (continuation of second sheet) (January 2015)

**INTERNATIONAL SEARCH REPORT**
Information on patent family members

| International application No. |
|---|
| PCT/JP2021/022740 |

| Patent Documents referred in the Report | Publication Date | Patent Family | Publication Date |
|---|---|---|---|
| WO 2019/111832 A1 | 13 Jun. 2019 | US 2020/0340130 A1 paragraphs [0009], [0010], [0098], [0099], [0105], [0115]-[0143], fig. 1, 5-13 CN 11143391 A KR 10-2020-0095533 A TW 201937000 A | |
| JP 6-049675 A | 22 Feb. 1994 | US 5372692 A column 4, line 42 to column 8, line 66, fig. 4, 8 DE 4318533 A IT 93501143 A | |
| JP 3-249189 A | 07 Nov. 1991 | (Family: none) | |
| JP 62-502125 A | 20 Aug. 1987 | US 4767519 A column 4, lines 64-68, column 5, lines 31-58, fig. 1 WO 1986/005216 A1 EP 215078 A DE 3680612 A IT 1200403 B AU 5623486 A ES 552761 A CA 1275070 A DD 243516 A EG 17691 A IL 78060 A CZ 156586 A MX 163397 B SK 156586 A CN 86102194 A BR 8605698 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4530743 A
- JP S59173281 A
- WO 2013191140 A1
- JP 2015117417 A